(19) Europäisches Patentamt
European Patent Office
Office européen des brevets

(11) **EP 3 910 363 B1**

(12) **FASCICULE DE BREVET EUROPEEN**

(45) Date de publication et mention de la délivrance du brevet:
**15.02.2023 Bulletin 2023/07**

(21) Numéro de dépôt: **21173649.1**

(22) Date de dépôt: **12.05.2021**

(51) Classification Internationale des Brevets (IPC):
**G01S 5/06** (1968.09)  **G01S 5/02** (1968.09)
**H04W 64/00** (2009.01)

(52) Classification Coopérative des Brevets (CPC):
**G01S 5/06; G01S 5/02213**

(54) **MÉTHODES DE LOCALISATION D'UN OBJET CONNECTÉ PAR DIFFÉRENCES DE PHASE D'ARRIVÉE DANS UN RÉSEAU LPWA**

METHODE ZUR LOKALISIERUNG EINES VERBUNDENEN OBJEKTS DURCH PHASENDIFFERENZEN DES EINGANGS IN EIN LPWA-NETZWERK

METHODS FOR LOCATING A CONNECTED OBJECT BY PHASE DIFFERENCES OF ARRIVAL IN AN LPWA NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.05.2020 FR 2004730**

(43) Date de publication de la demande:
**17.11.2021 Bulletin 2021/46**

(73) Titulaire: **Commissariat à l'énergie atomique et aux énergies alternatives 75015 Paris (FR)**

(72) Inventeurs:
• **WOLF, Florian 38054 GRENOBLE CEDEX 09 (FR)**
• **DE RIVAZ, Sébastien 38084 GRENOBLE CEDEX 09 (FR)**
• **DEHMAS, François 38054 GRENOBLE (FR)**

(74) Mandataire: **Brevalex 56, Boulevard de l'Embouchure B.P. 27519 31075 Toulouse Cedex 2 (FR)**

(56) Documents cités:
**DE-A1-102007 043 649**    **US-A1- 2019 227 158**

• **WOLF FLORIAN ET AL: "Coherent Multi-Channel Ranging for Narrowband LPWAN: Simulation and Experimentation Results", 2018 15TH WORKSHOP ON POSITIONING, NAVIGATION AND COMMUNICATIONS (WPNC), IEEE, 25 octobre 2018 (2018-10-25), pages 1-6, XP033460376, DOI: 10.1109/WPNC.2018.8555746**
• **PICHLER M ET AL: "Multi-Channel Distance Measurement With IEEE 802.15.4 (ZigBee) Devices", IEEE JOURNAL OF SELECTED TOPICS IN SIGNAL PROCESSING, IEEE, US, vol. 3, no. 5, 1 octobre 2009 (2009-10-01), pages 845-859, XP011278682, ISSN: 1932-4553, DOI: 10.1109/JSTSP.2009.2030935**

**Description**

**Domaine technique**

La présente invention concerne le domaine général de la localisation des objets et plus particulièrement d'objets connectés dans un réseau LPWA (*Low Power Wide Area*) à bande étroite tel qu'un réseau LoRa, SigFox ou NB-IoT.

**Etat de la technique antérieure**

La géolocalisation des objets connectés est devenue un enjeu important dans le domaine de l'IoT (*Internet of Things*). Elle permet notamment d'enrichir les informations transmises par ces objets par des informations de localisation, de gérer plus efficacement le réseau et de développer des applications de suivi géographique lorsque les objets sont mobiles.

Une première possibilité de géolocalisation consiste à équiper les objets connectés de modules de réception GNSS (*Global Navigation Satellite System*). Toutefois, cette option est coûteuse et n'est généralement pas compatible avec les contraintes de consommation énergétique très strictes de ces objets. En outre, elle est exclue lorsque les objets connectés sont déployés dans un environnement intérieur (*indoor*).

Une seconde possibilité de géolocalisation est d'effectuer une trilatération à partir des signaux radio émis par les objets connectés et reçus par différentes stations de base. Toutefois, les signaux émis dans les réseaux LPWA, qu'ils utilisent une bande licenciée (NB-IoT) ou non (SigFox, LoRa) sont à faible débit et bande étroite pour se propager sur de longues distances (jusqu'à plusieurs kilomètres). Le fait que les signaux radio émis soient à bande étroite conduit à une limitation inhérente importante de la résolution des temps d'arrivée (ToA) de ces signaux et donc à une faible résolution en distance de la position des objets connectés. Cette faible résolution temporelle peut notamment conduire à des erreurs de position importantes lorsque les canaux de transmission sont de type multi-trajet, dans la mesure où les différents trajets ne peuvent être discriminés.

Dans le domaine du radar, il est connu de mesurer une distance à une cible en utilisant une pluralité de signaux à bande étroite, de manière à ne pas recourir à des convertisseurs CAN de haute fréquence. Plus précisément, cette technique (connue sous le nom de *stepped frequency radar*), consiste à faire varier par sauts successifs la fréquence porteuse du signal émis tout en conservant une bande étroite instantanée, la réponse complexe étant alors mesurée pour chaque fréquence porteuse. En combinant de manière cohérente les mesures, plus précisément en effectuant une transformée de Fourier inverse des mesures ainsi obtenues, on obtient une réponse impulsionnelle du canal dans le domaine temporel. La résolution temporelle est alors inversement proportionnelle à la largeur de bande de fréquence virtuelle balayée et non plus proportionnelle à la largeur de bande instantanée. Une technique similaire, dénommée « *coherent multi-channel ranging* », a été appliquée dans des réseaux LR WPAN (Low Rate Wireless Personal Area Network) pour déterminer la position de transpondeurs ZigBee, comme décrit dans l'article de M. Pichler et al. intitulé « Multi-channel distance measurement with IEEE 802.15.4 (ZigBee) devices » publié dans IEEE Journal of selected topics in signal processing , Vol. 3, No. 5, Oct. 2009, pp. 845-859. Toutefois, l'article précité fait appel à des hypothèses restrictives fortes sur le scénario de propagation, à savoir une situation de vue directe (LOS ou *Line of Sight*) et l'absence de multi-trajet.

La technique précédente a été utilisée pour estimer la distance entre un objet connecté et une station de base dans un réseau LPWA et, par trilatération au moyen de plusieurs stations de base, pour estimer la position de cet objet. Cette méthode, dite par mesure de phase de vol ou PoF (*Phase of Flight*), a été décrite dans l'article de F. Wolf et al. intitulé « Cohérent multi-channel ranging for narrowband LPWAN : simulation and expérimentation results », Proc. of 15th Workshop on Positioning, Navigation and Communication (WPNC), 2018, pp. 1-6. L'avantage de cette méthode réside dans le fait de pouvoir s'affranchir des offsets de phase et de fréquence entre l'objet connecté et les différentes stations de base au moyen d'une transmission aller-retour d'un paquet entre l'objet connecté et chaque noeud. Toutefois, elle suppose que le réseau IoT autorise de telles transmissions bidirectionnelles et requiert en outre la transmission d'un nombre important de paquets, nombre d'autant plus élevé que les stations de base intervenant dans la localisation sont plus nombreuses. En outre, le risque de collisions entre paquets, notamment si le réseau est dense, peut conduire à une dégradation significative des performances du réseau.

Une autre méthode de localisation ne nécessitant pas de synchronisation entre le noeud à localiser et les stations de base, tout en permettant de réduire le nombre de paquets à transmettre, a été décrite dans la demande de brevet DE-A-10 2007 043 649. Cette méthode fait appel à une trilatération hyperbolique à partir des différences de phase d'arrivée d'un paquet émis par l'objet à localiser.

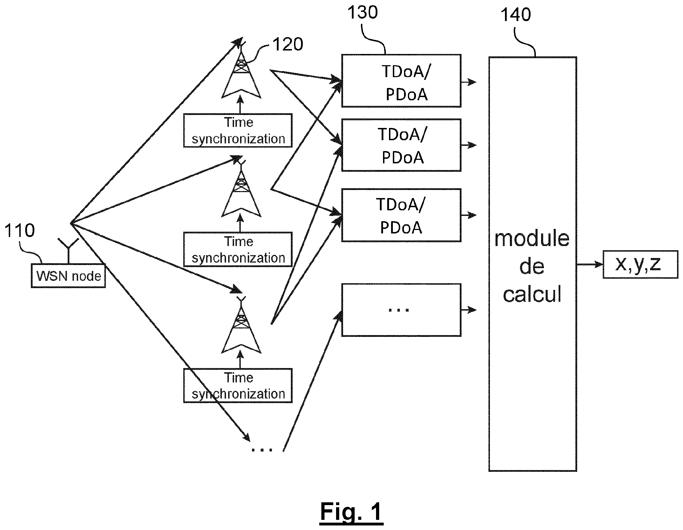

Le principe d'une localisation par trilatération hyperbolique à partir de temps d'arrivée ou ToA (*Time of Arrival*) est illustré en Fig. 1.

On a représenté en 110 un objet connecté, désigné sur la Fig. 1 par WSN (*Wireless Sensor Network*) Node, et en 120 des stations de base du réseau LPWA. Les stations sont supposées synchronisées entre elles au moyen d'une même horloge. Les temps d'arrivée d'un paquet émis par l'objet connecté et reçu par les stations de base soustraits deux à deux, dans les modules 130, la différence de temps d'arrivée pour deux stations de base $BS,$ et $BS_l$ correspond à une différence de trajet de propagation :

$$\Delta d_{i\ell} = c_{light}\left(t_i^A - t_\ell^A\right) \tag{1}$$

où $c_{light}$ est la vitesse de la lumière.

Si l'on suppose que les trajets de propagation entre le noeud connecté et les stations de base sont en ligne directe (LOS), la mesure des différences de temps d'arrivée entre au moins 3 (resp. 4) stations de base permet de déterminer par trilatération hyperbolique, au moyen du module de calcul 140, la position de l'objet dans le plan (resp. l'espace).

En pratique, on dispose d'un plus grand nombre de mesures de différences de temps d'arrivée que le minimum requis de sorte que le système d'équations est surdéterminé. On utilise alors des techniques de minimisation d'erreur quadratique avec le calcul d'une matrice pseudo-inverse pour résoudre le système d'équations.

La méthode de localisation par différences de temps d'arrivée suppose d'utiliser les signaux large bande (par conséquent bien définis temporellement). Les réseaux LPWA étant au contraire à bande étroite, on peut mettre en oeuvre la technique de bande virtuelle précitée en combinant de manière cohérente des mesures de différences de phase d'arrivée entre stations de base, effectuées à une pluralité de fréquences. Dans ce cas, les modules 130 effectuent une corrélation des signaux reçus aux différentes fréquences puis une IDFT sur les résultats ainsi obtenus aux différentes fréquences, avant de résoudre le système d'équations précité dans le module de calcul 140.

Toutefois, cette dernière approche nécessite un noeud de référence (objet géolocalisé) transmettant des signaux permettant aux stations de base de se synchroniser et se caler en phase entre elles. Or, l'ajout d'un tel noeud de référence, situé qui plus est à l'intersection des zones de couverture des différentes stations de base participant à la localisation, se prête mal au contexte d'un réseau LPWA, notamment lorsqu'il est déployé dans un environnement extérieur. Cette synchronisation avec le noeud de référence nécessite d'émettre/recevoir des paquets supplémentaires ce qui alourdit la charge du réseau et accroît la consommation des stations de base. En outre, l'émission du noeud de référence doit être synchrone avec celle du noeud à localiser, ce qui est en contradiction avec la nature asynchrone du réseau LPWA.

Un objet de la présente invention est par conséquent de proposer une méthode de localisation précise d'un objet connecté dans un réseau LPWA qui ne nécessite ni de transmettre un grand nombre de paquets ni d'effectuer une synchronisation précise des stations de base au moyen d'un noeud de référence.

**Présentation de l'invention**

La présente invention est définie par une méthode de localisation d'un objet connecté dans un réseau LPWA à l'aide d'une pluralité de stations de base, l'objet connecté émettant un signal RF composé d'une séquence de paquets dans une pluralité de canaux de fréquence formant une bande virtuelle, la bande virtuelle étant balayée une première fois selon une première séquence de canaux et une seconde fois selon une seconde séquence de canaux, la première et la seconde séquences de canaux étant temporellement symétriques, ladite méthode de localisation étant spécifique en ce que :

(a) chaque station de base effectue une translation du signal RF à la fréquence du canal, un échantillonnage du signal RF translaté, puis une translation en bande de base en mode numérique par multiplication avec des phaseurs, l'échantillonnage étant synchrone avec une horloge générale, commune à l'ensemble des stations de base ;

(b) chaque station de base estime le coefficient d'atténuation du canal de transmission entre l'objet connecté et elle-même, en bande de base, ainsi qu'une phase d'arrivée d'un paquet, dite phase d'arrivée, ce pour chaque canal de fréquence de la première séquence et de la seconde séquence de canaux ;

(c) chaque station de base somme les phases d'arrivée de paquets relatifs à un même canal mais à des séquences de canaux distinctes pour obtenir une phase d'arrivée moyennée pour chaque canal $(\Phi_c^{[T,R_l]})$ ;

(d) chaque station de base estime l'offset de fréquence $(\hat{\delta}_f^{[R_l]})$ entre sa fréquence d'échantillonnage et celle de l'émetteur, puis corrige pour chaque canal la phase d'arrivée moyennée d'une erreur de phase due à cet offset de fréquence, de manière à obtenir une phase d'arrivée moyennée et corrigée $(\Phi'^{[T,R_l]}_c)$ ;

(e) chaque station de base transmet à un serveur les coefficients d'atténuation et les phases d'arrivée moyennées et corrigées précédemment estimés ;

(f) le serveur calcule, pour chaque couple de stations de base de ladite pluralité, les différences de phase d'arrivée moyennées et corrigées de manière à obtenir des différences de de phase d'arrivée

$$\left( \left\{ \Phi_c^{[R_i, R_\ell]} = \Phi'^{[T, R_i]}_c - \Phi'^{[T, R_\ell]}_c \right\} \right)$$

, pour chaque fréquence de canal ;

(g) le serveur construit, pour chaque couple $(BS_i, BS_l)$ constitué d'une première et d'une seconde stations de base, une fonction de transfert composite ($\tilde{H}^{[R_i, R_l]}$) relative à ces deux stations de base, à partir des coefficients d'atténuation du canal de transmission entre l'objet connecté et la première station de base (respectivement la seconde station de base) pour les différents canaux de fréquence, ainsi que les différences de phase d'arrivée obtenues à l'étape précédentes pour ledit couple de stations de base et pour ces mêmes canaux de fréquence ;

(h) le serveur effectue une transformée de Fourier inverse de chaque fonction de transfert composite obtenue à l'étape précédente de manière à obtenir une réponse impulsionnelle composite ($\tilde{h}^{[R_i, R_l]}(t)$) pour chaque couple de stations de base de ladite pluralité ;

(i) le serveur détecte le pic de plus grande amplitude dans chacune des réponses impulsionnelles composites et en déduit, pour chaque couple $(BS_i, BS_l)$ constitué d'une première et d'une seconde stations de base, une différence de distance ($\Delta d_{il}$) entre l'objet connecté et la première station de base, d'une part, et entre l'objet connecté et la seconde station de base, d'autre part ;

(j) le serveur estime la position de l'objet connecté par trilatération hyperbolique à partir des différences de distance obtenues à l'étape précédente.

Avantageusement, la première séquence de canaux est obtenue par un balayage dans le sens ascendant et la seconde séquence de canaux est obtenue par un balayage dans le sens descendant, les balayages ascendant et descendant étant réalisés de manière uniforme avec un saut de fréquence constant ($\Delta f$).

De préférence, à l'étape (a), la translation en bande de base est réalisée en multipliant, à la cadence de la fréquence d'échantillonnage, les échantillons du signal RF translaté, par des phaseurs exp($-j2\pi f_c k T_s$) où $f_c$ est la fréquence du canal, $f_s = 1/T_s$ est la fréquence d'échantillonnage du récepteur et $k$ est le rang de l'échantillon.

Selon une variante préférée, à l'étape (b), l'estimation du coefficient du canal de transmission et de la phase d'arrivée d'un paquet d'échantillons est obtenue en corrélant la séquence des échantillons du signal en bande de base avec une séquence pilote, le module du résultat de corrélation étant composé des gains de l'émetteur et du récepteur pour obtenir ledit coefficient du canal de transmission.

De même, à l'étape (c), la station de base peut effectuer, pour chaque canal de fréquence, la somme

$$\Phi_c^{[T, R_i]} = \phi_c^{[T, R_i]} + \phi_{2C+1-c}^{[T, R_i]} \; , \quad \phi_c^{[T, R_i]}$$

étant la phase d'arrivée du paquet c émis à la fréquence de canal $f_c$ lors d'un premier sens de balayage et $\phi_{2C+1-c}^{[T, R_i]}$ est la phase d'arrivée du paquet 2C + 1 - c émis à la fréquence de canal $f_c$, lors d'un second sens de balayage opposé au premier, K est le nombre d'échantillons dans un paquet et C est le nombre de paquets par sens de balayage.

A l'étape (d) la phase d'arrivée moyennée $\Phi_c^{[T, R_i]}$ pourra être corrigée par

$$\Phi'^{[T, R_i]}_c = \Phi_c^{[T, R_i]} + 4\pi \left( \frac{\hat{\delta}_f^{[R_i]}}{1 + \hat{\delta}_f^{[R_i]}} \right) f_c C K T_s$$

où $\hat{\delta}_f^{[R_i]}$ est l'offset de fréquence estimé à cette même étape, $f_c$ est la fréquence du canal, C est le nombre de paquets par balayage, $K$ est le nombre d'échantillons par paquet et $f_s = 1/T_s$ est la fréquence d'échantillonnage.

Dans tous les cas, à l'étape (g), pour chaque couple de stations de base constitué par une première station de base $BS_i$ et une seconde station de base $BS_l$, le serveur construit la fonction de transfert composite par

$$\tilde{H}_c^{[R_i, R_\ell]} = \alpha_c^{[T, R_i]} \alpha_{2C+1-c}^{[T, R_i]} \alpha_c^{[T, R_\ell]} \alpha_{2C+1-c}^{[T, R_\ell]} \exp\left( j\Phi_c^{[R_i, R_\ell]} \right)$$

où $\alpha_c^{[T, R_i]}, \alpha_{2C+1-c}^{[T, R_i]}$ sont les coefficients d'atténuation du canal de transmission entre l'objet connecté et la station de base $BS_i$ à la fréquence de canal $f_c$, respectivement lors du premier et du second balayage, où $\alpha_c^{[T, R_\ell]}, \alpha_{2C+1-c}^{[T, R_\ell]}$ sont les coefficients d'atténuation du canal de transmission entre l'objet connecté et la station de base *BS,* à la fréquence de canal $f_c$, respectivement lors du premier et du second balayage, et où $\Phi_c^{[R_i,R_\ell]}$ est la différence de phase d'arrivée obtenue à l'étape (f) pour le couple de stations de base $BS_i$, $BS_l$ et pour la fréquence de canal $f_c$.

A l'étape (i), la différence de distance entre l'objet connecté et une première station de base $BS_i$ d'une part, et l'objet connecté et une seconde station de base $BS_l$, d'autre part est typiquement obtenue par

$$\Delta d_{i\ell} = \frac{c_{light}}{2} \arg\max_t \left( \left| \tilde{h}^{[R_i,R_\ell]}(t) \right| \right)$$

où $\tilde{h}^{[R_i,R_l]}(t)$ est la réponse impulsionnelle composite obtenue à l'étape (h) pour le couple de stations de base $BS_i$, $BS_l$, et $c_{light}$ est la vitesse de la lumière.

L'horloge globale peut être donnée par un module de réception GNSS équipant chacune des stations de base de ladite pluralité.

Alternativement, l'horloge globale peut être obtenue via Internet au moyen du protocole NTP auprès d'un serveur de temps.

Alternativement encore, l'horloge globale peut être obtenue via un réseau d'amenée 5G.

Un second mode de réalisation de l'invention concerne en outre une méthode de localisation d'un objet connecté dans un réseau LPWA à l'aide d'une pluralité de stations de base, l'objet connecté émettant un signal RF composé d'une séquence de paquets dans une pluralité de canaux de fréquence formant une bande virtuelle, la bande virtuelle étant balayée une première fois, selon une première séquence de canaux et une seconde fois selon une seconde séquence de canaux, la première et la seconde séquences de canaux étant temporellement symétriques, ladite méthode étant spécifique en ce que :

(a) chaque station de base effectue une translation du signal RF à la fréquence du canal, un échantillonnage du signal RF translaté, puis une translation en bande de base en mode numérique par multiplication avec des phaseurs, l'échantillonnage étant synchrone avec une horloge générale, commune à l'ensemble des stations de base ;

(b) chaque station de base estime le coefficient d'atténuation du canal de transmission entre l'objet connecté et elle-même, en bande de base, ainsi qu'une phase d'arrivée d'un paquet, dite phase d'arrivée, ce pour chaque canal de fréquence de la première séquence et de la seconde séquence de canaux ;

(c) chaque station de base somme les phases d'arrivée de paquets relatifs à un même canal mais à des séquences de canaux distinctes pour obtenir une phase d'arrivée moyennée pour chaque canal $\left( \Phi_c^{[T,R_i]} \right)$ ;

(d) chaque station de base estime l'offset de fréquence $\left( \hat{\delta}_f^{[R_i]} \right)$ entre sa fréquence d'échantillonnage et celle de l'émetteur, puis corrige pour chaque canal la phase d'arrivée moyennée d'une erreur de phase due à cet offset de fréquence, de manière à obtenir une phase d'arrivée moyennée et corrigée $\left( {\Phi'}_c^{[T,R_i]} \right)$ ;

(e) chaque station de base transmet à un serveur les coefficients d'atténuation et les phases d'arrivée moyennées et corrigées précédemment estimés ;

(f) le serveur comporte un réseau de neurones préalablement entraîné, les coefficients d'atténuation et les phases d'arrivée moyennées et corrigées pour chaque station de base de ladite pluralité étant fournies à la couche d'entrée du réseau de neurones et la couche de sortie du réseau de neurones fournissant une estimation de la position de l'objet connecté.

**Brève description des figures**

D'autres caractéristiques et avantages de l'invention apparaîtront à la lecture d'un mode de réalisation préférentiel de l'invention, décrit en référence aux figures jointes parmi lesquelles :

La Fig. 1, déjà décrite, représente de manière schématique le principe d'une localisation par trilatération hyperbolique dans un réseau LPWA, connue de l'état de la technique ;

La Fig. 2 représente de manière schématique l'architecture d'un récepteur dans une station de base d'un réseau LPWA participant à la mise en oeuvre de l'invention ;

La Fig. 3 représente de manière schématique un balayage de bande virtuelle pouvant être utilisé dans la méthode de localisation selon un mode de réalisation de l'invention ;

La Fig. 4 représente l'organigramme d'une méthode de localisation d'un objet connecté dans un réseau LPWA selon un premier mode de réalisation de la présente invention ;

La Fig. 5 représente de manière schématique une méthode de localisation d'un objet connecté selon un second mode de réalisation de l'invention ;

La Fig. 6 illustre sur un exemple les performances d'une méthode de localisation d'un objet connecté selon l'invention en comparaison avec celles d'une méthode de localisation connue de l'état de la technique.

## Description des modes de réalisation

On considérera dans la suite un réseau LPWA (*Low Power Wide Area*) tel que présenté dans la partie introductive, par exemple un réseau LoRa, SigFox ou NB-IoT. Ces réseaux ont notamment pour caractéristique d'utiliser des signaux à bande étroite (typiquement d'une centaine de Hz à une centaine de kHz) et à bas débit pour permettre des communications de longue portée (typiquement d'un km à quelques dizaines de kms).

Les noeuds d'un réseau LPWA comprennent, d'une part, des objets connectés encore dénommés noeuds terminaux, et, d'autre part, des stations de base. Un objet connecté servi par une station de base échange avec celle-ci des paquets de données sur un canal de transmission qui est généralement de type multi-trajet.

On considérera dans la suite le signal émis par l'émetteur d'un objet connecté et reçu par une station de base du réseau LPWA. Les valeurs relatives à l'émetteur (c'est-à-dire à l'objet connecté) sont désignées conventionnellement par l'indice suscrit T et celles relatives au récepteur (c'est-à-dire à une station de base) par l'indice suscrit R.

Le signal numérique en bande de base peut s'écrire sous la forme :

$$s_{BB}^{[T]}(t) = \sum_{k=0}^{K-1} \Pi_{T_s}(t - t_D^{[T]} - kT_s)s[k] \qquad (2)$$

où K est le nombre d'échantillons de la forme d'onde considérée, $\Pi_{T_s}$ est la fonction porte de largeur $T_s$, $t_D^{[T]}$ est l'instant correspondant au début de l'émission ou ToD (*Time of Departure*), mesuré avec horloge locale de l'émetteur, $T_s$ est la période d'échantillonnage et $s[k]$ $k = 0,...,K-1$, sont les échantillons de la forme d'onde, connue *a priori* de l'émetteur comme du récepteur. Par exemple, la forme d'onde peut correspondre à un préambule de synchronisation d'un paquet, constitué de symboles pilotes, voire à un paquet entier en supposant que la démodulation soit effectuée sans erreur.

Les échantillons en bande de base sont ensuite convertis par un convertisseur numérique analogique (CNA). Le convertisseur CNA n'est pas synchronisé par rapport à l'horloge de référence. On peut décrire l'évolution relative de l'horloge locale servant à la conversion par rapport à l'horloge de référence au moyen d'un offset de fréquence, $\delta_f^{[T]}$, et d'un offset temporel, $t_0^{[T]}$, soit :

$$t^{[T]} = \left(1 + \delta_f^{[T]}\right)t + t_0^{[T]} \qquad (3)$$

Le signal en bande de base est ensuite translaté à une fréquence intermédiaire $f_c$, correspondant au canal c, avant d'être translaté en bande RF. Alternativement, le signal peut être directement translaté à la fréquence $F_c^{[T]} = f_{RF} + f_c$ où $f_{RF}$ est la fréquence de la porteuse RF.

Dans tous les cas, le signal émis peut s'exprimer en notation complexe sous la forme:

$$s_c^{[T]}(t) = g_c^{[T]}s_{BB}^{[T]}(t^{[T]})\exp j\left(2\pi F_c^{[T]}t + \phi_c^{[T]}\right) \qquad (4)$$

où $F_c^{[T]}$ est la fréquence du signal émis, $\phi_c^{[T]}$ représente la phase du signal émis à l'origine et $g_c^{[T]}$ est le gain complexe de l'émetteur. La fréquence $F_c^{[T]}$ tout comme la fréquence d'échantillonnage $f_s = 1/T_s$ du convertisseur

numérique analogique sont obtenues à partir de l'horloge locale de l'émetteur.

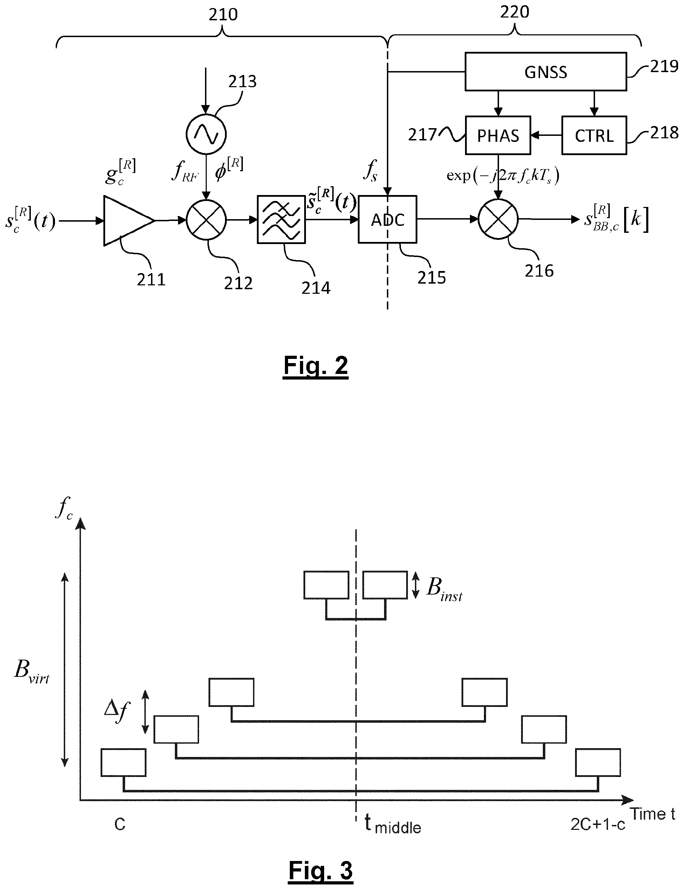

Le signal émis par l'objet connecté est reçu par le récepteur d'une station de base dont on a représenté schématiquement l'architecture en Fig. 2.

Le récepteur comporte un premier étage, 210, dit étage RF, assurant la translation en fréquence du signal RF reçu à une fréquence intermédiaire, et un second étage, 220, dit étage IF, assurant la translation en bande de base.

L'étage RF opère en mode analogique. Il comprend un amplificateur bas bruit, 211, un mélangeur RF, 212, recevant une horloge à la fréquence nominale $f_{RF}$ générée par un oscillateur RF, 213. En réalité, la fréquence de l'oscillateur RF est décalée d'un offset, soit $f_{RF}\left(1+\delta_f^{[R]}\right)$ comme nous verrons plus loin. Le signal en sortie du mélangeur est ensuite filtré par un filtre passe-bas, 214, avant d'être échantillonné et converti en numérique par le convertisseur analogique-numérique, 215. Le convertisseur analogique numérique échantillonne le signal à une fréquence d'échantillonnage $f_s = 1/T_s$ obtenue à partir d'une horloge de synchronisation générale. Cette horloge permet de synchroniser les stations de base entre elles, typiquement avec une précision de l'ordre de 10 à 30 ns en valeur quadratique moyenne.

Selon une caractéristique avantageuse de l'invention, l'étage IF opère en mode numérique. Les échantillons IF en sortie du CAN 215 sont translatés en bande de base au moyen d'un multiplicateur complexe, 216, recevant d'un générateur numérique, 217, des phaseurs sous forme numérique. Plus précisément ces phaseurs, qui représentent des valeurs complexes $\exp(-j2\pi f_c kT_s)$ évoluant à la fréquence $f_c$ du canal, sont fournis au multiplicateur complexe, à la cadence $f_s$. Le générateur numérique 217 est contrôlé par un contrôleur de canal 218. Sur commande du contrôleur 218, le générateur numérique 217 peut faire varier la fréquence $f_c$ en lisant les phaseurs correspondants dans une mémoire (non représentée). Le générateur numérique est synchronisé avec l'horloge de synchronisation générale.

Avantageusement, l'horloge de synchronisation générale peut être obtenue grâce à un module de réception GNSS (*Global Navigation Satellite System*), par exemple un module d'acquisition de code de récepteur GPS. Alternativement, l'horloge de synchronisation générale peut être fournie par le réseau d'amenée (*bockhaut network*) d'un réseau 5G ou des liaisons par fibres optiques entre stations de base. La synchronisation peut alternativement être obtenue via Internet au moyen du protocole NTP (*Network Time Protocol*) auprès d'un serveur de temps. D'autres types de synchronisation avec la précision précitée pourront être envisagées.

A la réception par la station de base, le signal RF se présente sous la forme suivante, dans laquelle on a omis la composante de bruit additif :

$$s_c^{[R]}(t) = s_c^{[T]}(t) * h^{[T,R]}(t,\tau) \tag{5}$$

où $h^{[T,R]}(t,\tau)$ est la réponse impulsionnelle du canal à l'instant $t$ entre l'objet connecté et la station de base considérée et * est le produit de convolution. Dans un but de simplification de la présentation et sans perte de généralité, on suppose que ce canal est invariant dans le temps. En pratique, il suffira que le canal soit invariant pendant le temps de la mesure, c'est-à-dire sensiblement pendant la durée de balayage de la bande virtuelle. En outre, le signal en bande de base étant à bande étroite, le canal peut être modélisé, pour chaque bande autour de $F_c^{[T]}$ par un simple coefficient complexe, soit $A_c^{[T,R]}$. Le signal reçu peut alors s'écrire :

$$s_c^{[R]}(t) = A_c^{[T,R]} s_c^{[T]}\left(t - \tau_0^{[T,R]}\right) \tag{6-1}$$

avec

$$A_c^{[T,R]} = \alpha_c^{[T,R]} \exp(j\varphi_c^{[T,R]}) = \sum_{p=0}^{P-1} a_p^{[T,R]} \exp\left(-j2\pi F_c^{[T]}\left(\tau_p^{[T,R]} - \tau_0^{[T,R]}\right)\right) \tag{6-2}$$

où $a_p^{[T,R]}$ et $\tau_p^{[T,R]}$ sont respectivement les coefficients d'atténuation et les retards des différents chemins de propa-

gation, $\tau_0^{[T,R]} = d^{[T,R]}/c_l$ étant le temps de propagation sur le chemin en ligne directe (LOS) où $d^{[T,R]}$ est la distance entre l'objet connecté et la station de base.

Le signal RF reçu est translaté en fréquence par mélange avec la fréquence $f_{RF}^{[R]} = \left(1 + \delta_f^{[R]}\right) f_{RF}$ où $\delta_f^{[R]}$ est l'offset relatif de fréquence entre l'émetteur et le récepteur. Le signal à la fréquence intermédiaire avant conversion analogique numérique peut être représenté en notation complexe par :

$$\tilde{s}_c^{[R]}(t) = g_c^{[R]} s_c^{[R]}(t) \exp\left(-j\left(2\pi f_{RF}^{[R]} t + \phi^{[R]}\right)\right) \qquad (7)$$

où $g_c^{[R]}$ est le gain du récepteur à la fréquence $F_c^{[T]}$ et $\phi^{[R]}$ est la phase à l'origine de l'oscillateur RF.

Après échantillonnage à la fréquence $f_s = 1/T_s$, les échantillons du signal à la fréquence intermédiaire sont ceux pris aux instants $\dfrac{kT_s - t_0^{[R]}}{1 + \delta_f^{[R]}}$ mesurés par rapport à l'horloge de référence, c'est-à-dire :

$$\hat{s}_k^{[R]}(kT_s) = \tilde{s}_c^{[R]}\left(\frac{kT_s - t_0^{[R]}}{1 + \delta_f^{[R]}}\right) \qquad (8)$$

l'horloge du récepteur n'étant en effet pas synchronisée avec l'horloge de référence. Le temps relatif à l'horloge locale varie comme $t^{[R]} = \left(1 + \delta_f^{[R]}\right) t + t_0^{[R]}$ où $t_0^{[R]}$ est un offset temporel et $\delta_f^{[R]}$ est l'offset relatif de fréquence introduit précédemment.

Ces échantillons font ensuite l'objet d'une translation en bande de base par multiplication avec les phaseurs numériques à la fréquence du canal considéré :

$$s_{BB,c}^{[R]}[k] = \hat{s}_k^{[R]}(kT_s) \cdot \exp\left(-j2\pi f_c k T_s\right) + n_c^{[T,R]}[k] \qquad (9)$$

où $\exp(-j2\pi f_c k T_s)$, $k = 0,\ldots,K\text{-}1$, sont les phaseurs en question et $n_c^{[T,R]}[k]$ sont des échantillons de bruit.

En combinant les expressions (2) à (4) et (6-1) à (9), on obtient les échantillons de signal reçus en fonction de ceux émis en bande de base, soit :

$$s_{BB,c}^{[R]}[k] = g^{[R]} g^{[T]} \alpha_c^{[T,R]} \cdot \left\{ \sum_{\kappa=0}^{K-1} \Pi_{T_s}\left(\delta^{[T,R]}\left(kT_s - t_A^{[T,R]}\right) - \kappa T_s\right) s[\kappa] \right\} \cdot \exp j\left(\phi_c^{[T,R]}[k]\right) + n_c^{[T,R]}[k] \qquad (10)$$

avec $\phi_c^{[T,R]}[k] = 2\pi \delta_f^{[T,R]}\left(f_{RF} + f_c\right) k T_s + \phi_{A,c}^{[T,R]}[k]$ .

Les différents termes apparaissant dans l'expression (10) peuvent être interprétés comme suit : $g_c^{[R]}, g_c^{[T]}$ sont les gains complexes respectifs du récepteur et de l'émetteur à la fréquence $F_c$. Ces gains varient généralement en fonction de la fréquence, ils sont estimés et compensés dans une phase de calibration préalable. $\alpha_c^{[T,R]}$ est le module du coefficient complexe du canal de transmission à la fréquence $F_c$, son expression est donnée par :

$$\alpha_c^{[T,R]} = \left| A_c^{[T,R]} \right| = \left| \sum_{p=0}^{P-1} a_p^{[T,R]} \exp\left(-j2\pi\left(\left(\left(1+\delta_f^{[T]}\right)f_{RF}+f_c\right)\left(\tau_p^{[T,R]}-\tau_0^{[T,R]}\right)\right)\right) \right|$$

$$(11)$$

Le coefficient d'atténuation $\alpha_c^{[T,R]}$ est constant au sein de chaque canal de fréquence (*flat fading*) mais varie

$$\delta^{[T,R]} = \frac{1+\delta_f^{[T]}}{1+\delta_f^{[R]}}$$

d'un canal à l'autre en raison des trajets multiples du canal de transmission. est un facteur de dilatation temporelle entre l'émetteur et le récepteur. Il traduit le décalage des instants de conversion (CNA) et d'échan-

$$t_A^{[T,R]} = \left(1+\delta_f^{[R]}\right)\tau_0^{[T,R]} + \frac{1+\delta_f^{[R]}}{1+\delta_f^{[T]}}\left(t_D^{[T]}-t_0^{[T]}\right)+t_0^{[R]}$$

tillonnage (CAN) entre l'émetteur et le récepteur. est le temps d'arrivée du paquet dans la base de temps du récepteur. Le premier terme correspond au temps de propagation (affecté par la dérive de l'horloge locale du récepteur par rapport à l'horloge de référence), le second terme correspond à l'instant d'émission du paquet, (affecté par les dérives respectives des horloges de l'émetteur et du récepteur), et le dernier

$$\delta_f^{[T,R]} = \frac{\delta_f^{[T]}-\delta_f^{[R]}}{1+\delta_f^{[R]}}$$

terme correspond à l'offset temporel de l'émetteur. traduit l'offset relatif de fréquence d'horloge entre l'émetteur et le récepteur. $\phi_{A,c}^{[T,R]}$ est la phase d'arrivée du premier échantillon du paquet (k = 0) arrivant au récepteur de la station de base :

$$\phi_{A,c}^{[T,R]} = -2\pi\left(1+\delta_f^{[T]}\right)\left(f_{RF}+f_c\right)\tau_0^{[T,R]} + \varphi_c^{[T,R]}$$

$$+2\pi f_c t_0^{[T]} - 2\pi\left(\frac{\left(\delta_f^{[T]}-\delta_f^{[R]}\right)f_{RF}+\left(1+\delta_f^{[T]}\right)f_c}{1+\delta_f^{[R]}}\right)t_0^{[R]}$$

$$+\phi_c^{[T]}-\phi^{[R]}$$

$$(12)$$

et enfin $n_c^{[T,R]}[k]$ est un échantillon de bruit supposé blanc additif gaussien (AWGN).

La phase d'arrivée du signal, c'est-à-dire la phase d'un échantillon du signal en bande de base, lors de son arrivée au niveau du récepteur, est donnée par $\phi_c^{[T,R]}[k] = \left(2\pi\delta_f^{[T,R]}\left(f_{RF}+f_c\right)kT_s+\phi_{A,c}^{[T,R]}[k]\right)$ , comme on peut le voir dans l'équation (10).

Compte-tenu de l'expression (12), cette phase d'arrivée s'exprime comme suit :

$$\phi_c^{[T,R]}[k] = \; 2\pi\delta_f^{[T,R]}\left(f_{RF}+f_c\right)kT_s$$
$$-2\pi\left(1+\delta_f^{[T]}\right)\left(f_{RF}+f_c\right)\tau_0^{[T,R]}+\varphi_c^{[T,R]}$$
$$+2\pi f_c t_0^{[T]}-2\pi\left(\frac{\left(\delta_f^{[T]}-\delta_f^{[R]}\right)f_{RF}+\left(1+\delta_f^{[T]}\right)f_c}{1+\delta_f^{[R]}}\right)t_0^{[R]}$$
$$+\phi_c^{[T]}-\phi^{[R]}$$

$$(13)$$

Sans perte de généralité, on peut prendre arbitrairement comme horloge de référence celle de l'objet connecté, autrement dit $t_0^{[T]}=0$, $\delta_f^{[T]}=0$ et $\delta_f^{[T,R]}=\dfrac{-\delta_f^{[R]}}{1+\delta_f^{[R]}}$. Cette référence est avantageuse dans la mesure où se prête bien à l'expression des phases d'arrivée des stations de base servant à localiser l'objet. La phase d'arrivée du signal s'exprime alors de manière plus simple :

$$\phi_c^{[T,R]}[k] = \; -2\pi\frac{\delta_f^{[R]}}{1+\delta_f^{[R]}}\left(f_{RF}+f_c\right)kT_s$$
$$-2\pi\left(f_{RF}+f_c\right)\tau_0^{[T,R]}+\varphi_c^{[T,R]}$$
$$-2\pi\left(\frac{f_c-\delta_f^{[R]}f_{RF}}{1+\delta_f^{[R]}}\right)t_0^{[R]}$$
$$+\phi_c^{[T]}-\phi^{[R]}$$

$$(14)$$

Lorsque le signal émis par le noeud connecté est reçu par une pluralité de stations de base, la différence de phase d'arrivée du signal reçu par la station de base $BS_i$ (équipé du récepteur $R_i$) et la station de base $BS_l$ (équipé du récepteur $R_l$) permet d'éliminer la phase (inconnue) $\phi_c^{[T]}$ du signal RF de l'émetteur :

$$\Delta\phi_c^{[R_i,R_\ell]}[k] = \phi_c^{[T,R_i]}[k] - \phi_c^{[T,R_\ell]}[k] = -2\pi\left(\frac{\delta_f^{[R_i]}}{1+\delta_f^{[R_i]}} - \frac{\delta_f^{[R_\ell]}}{1+\delta_f^{[R_\ell]}}\right)(f_{RF}+f_c)kT_s$$
$$-2\pi(f_{RF}+f_c)\left(\tau_0^{[T,R_i]}-\tau_0^{[T,R_\ell]}\right)+\left(\varphi_c^{[T,R_i]}-\varphi_c^{[T,R_\ell]}\right)$$
$$+2\pi f_{RF}\left(\frac{\delta_f^{[R_i]}t_0^{[R_i]}}{1+\delta_f^{[R_i]}} - \frac{\delta_f^{[R_\ell]}t_0^{[R_\ell]}}{1+\delta_f^{[R_\ell]}}\right)$$
$$-2\pi f_c\left(\frac{t_0^{[R_i]}}{1+\delta_f^{[R_i]}} - \frac{t_0^{[R_\ell]}}{1+\delta_f^{[R_\ell]}}\right)$$
$$-\left(\phi^{[R_i]}-\phi^{[R_\ell]}\right)$$

$$(16)$$

Le fait que la différence de temps d'arrivée ne dépend plus de la phase du signal RF de l'émetteur est essentiel, car cela permet de s'affranchir entièrement des contraintes pesant sur l'architecture matérielle de l'émetteur, en particulier sur la stabilité de son oscillateur RF.

La différence de phase d'arrivée entre les deux stations de base comprend plusieurs termes. Le premier terme correspond au glissement de phase au cours du temps dû à l'offset relatif des fréquences d'échantillonnage dans les récepteurs des deux stations de base. Le deuxième terme porte l'information utile de différence de temps de propagation du signal. Le troisième terme se traduit comme une erreur de synchronisation des étages RF des deux récepteurs et le quatrième terme une erreur de synchronisation relative des étages IF. Ces erreurs de synchronisation sont dues aux offsets temporels entre les fréquences d'échantillonnage des stations de base. Enfin, le dernier terme correspond à la différence de phase à l'origine entre les oscillateurs RF des deux récepteurs.

Un point essentiel à noter est que, dans la mesure où la translation en bande de base est réalisée sous forme numérique par des phaseurs, aucune variation de phase à l'origine n'est introduite dans l'oscillateur IF et par conséquent le dernier terme reste constant lors du balayage en fréquence de la bande virtuelle. Cette caractéristique permet notamment d'éviter de recourir à un noeud de référence de position connue, comme cela était requis dans l'art antérieur.

Le principe de la localisation par différence de phase d'arrivée repose sur la capacité de pouvoir extraire la différence de temps de propagation $\tau_0^{[T,R_i]} - \tau_0^{[T,R_\ell]}$ (en LOS) à partir de la pente de $\Delta\phi_c^{[R_i,R_\ell]}[k]$, en fonction de la fréquence du canal $f_c$. Le premier terme et le quatrième terme de $\Delta\phi_c^{[R_i,R_\ell]}[k]$ sont des termes parasites dépendant également linéairement de la fréquence $f_c$ et doivent par conséquent être éliminés.

En pratique, on ne calcule pas le déphasage $\Delta\phi_c^{[R_i,R_\ell]}[k]$ sur chaque échantillon, mais sur chaque paquet, une estimation d'une phase d'arrivée moyennée sur le paquet, dite phase d'arrivée paquet, pour chaque station de base, soit $\phi_c^{[T,R_i]}$, $\phi_c^{[T,R_\ell]}$. Cette phase d'arrivée paquet est obtenue par corrélation d'un paquet de K échantillons avec une séquence pilote (ou bien avec une séquence décodée sans erreur). On en déduit une différence de phase d'arrivée paquet $\Delta\phi_c^{[R_i,R_\ell]} = \phi_c^{[T,R_i]} - \phi_c^{[T,R_\ell]}$ pour chaque canal.

Le premier terme de (16) peut être minimisé en adoptant le schéma de balayage fréquentiel de la bande virtuelle divulgué dans la demande DE-A-10 2007 043 649 et illustré en Fig. 3. Les contraintes inhérentes à ce schéma de balayage pourront cependant être relâchées comme expliqué plus loin.

On a représenté en ordonnées la fréquence de canal et en abscisses le temps. La bande virtuelle $B_{virt} = (C-1)\Delta f$ autour de la porteuse est balayée par sauts de $\Delta f$, un premier balayage étant effectué dans le sens ascendant et un second balayage, temporellement symétrique du premier, étant effectué dans le sens descendant. Plus précisément, la fréquence intermédiaire varie par sauts de $+\Delta f$, de manière à balayer successivement les C canaux dans le sens croissant lors du premier balayage puis varie par sauts de $-\Delta f$ de manière à balayer successivement les C canaux suivants dans le sens décroissant lors du second balayage. Il convient de noter que l'ordre des sens de balayage est indifférent. L'émetteur émet un paquet de K échantillons à chaque saut de fréquence, autrement dit la durée d'émission dans chaque canal est $KT_s$. Si l'on suppose que le changement de fréquence intermédiaire est instantané, la durée totale du balayage est $2CKT_s$.

L'élimination du premier terme peut être réalisée en sommant les différences de phase d'arrivée paquet, $\Delta\phi_c^{[R_i,R_\ell]}$ et $\Delta\phi_{2C+1-c}^{[R_i,R_\ell]}$ obtenues pour un même canal lors du balayage ascendant et du balayage descendant, la somme des premiers termes de (16) donnant alors l'erreur de phase :

$$-4\pi\left(\frac{\delta_f^{[R_i]}}{1+\delta_f^{[R_i]}}-\frac{\delta_f^{[R_\ell]}}{1+\delta_f^{[R_\ell]}}\right)(f_{RF}+f_c)CKT_s$$

$$(17)$$

On remarque que le facteur de $(f_{RF}+f_c)$ ne dépend plus du rang du paquet. Cette remarque reste encore valable lorsque la programmation du changement de canal n'est pas instantanée mais dure un temps $\theta$, la durée $CKT_s$ étant simplement augmentée de $2(C-1)\theta$.

$$-4\pi\left(\frac{\delta_f^{[R_i]}}{1+\delta_f^{[R_i]}}-\frac{\delta_f^{[R_\ell]}}{1+\delta_f^{[R_\ell]}}\right)f_{RF}.CKT_s$$

Cette composante d'erreur étant une simple constante , elle n'entre donc pas en ligne de compte dans l'extraction de la différence de temps d'arrivée.

La composante d'erreur de phase due à la différence entre à l'erreur de synchronisation des étages IF dépend en revanche linéairement de $f_c$. Cependant, étant donné que $f_c \ll f_{RF}$, la rotation de phase due à

$$\left(\frac{\delta_f^{[R_i]}}{1+\delta_f^{[R_i]}}-\frac{\delta_f^{[R_\ell]}}{1+\delta_f^{[R_\ell]}}\right)f_c$$

est relativement faible. L'offset de la fréquence d'échantillonnage de chaque récepteur peut être estimé de manière conventionnelle en observant l'évolution de la phase du signal reçu sur plusieurs échantillons au sein d'un même canal. On notera $\hat{\delta}_f^{[R_i]}$ et $\hat{\delta}_f^{[R_\ell]}$ les offsets de fréquence ainsi estimés pour les récepteurs des stations de base $BS_i$ et $BS_\ell$.

Dès lors que l'on connaît la durée $KT_s$ d'un paquet et, le cas échéant celle, $\theta$, séparant deux paquets successifs, on peut estimer l'erreur de phase (17).

En résumé, si l'on effectue le balayage décrit plus haut et que l'on somme les différences de phase d'arrivée paquet pour les canaux de même fréquence $f_{2C+1-c}=f_c$, on obtient après élimination de l'erreur de phase introduite par la différence des offsets de fréquence précédemment estimés :

$$\phi_c^{[R_i,R_\ell]}+\phi_{2C+1-c}^{[R_i,R_\ell]}-\left[-4\pi\left(\frac{\hat{\delta}_f^{[R_i]}}{1+\hat{\delta}_f^{[R_i]}}-\frac{\hat{\delta}_f^{[R_\ell]}}{1+\hat{\delta}_f^{[R_\ell]}}\right)f_c CKT_s\right]=$$

$$-4\pi\left(f_{RF}+f_c\right)\left(\tau_0^{[T,R_i]}-\tau_0^{[T,R_\ell]}\right)+\left(\varphi_c^{[T,R_i]}-\varphi_c^{[T,R_\ell]}\right)$$

$$-4\pi f_c\left(\frac{t_0^{[R_i]}}{1+\delta_f^{[R_i]}}-\frac{t_0^{[R_\ell]}}{1+\delta_f^{[R_\ell]}}\right)+\Phi$$

$$(18)$$

où $\Phi$ est une phase constante.

La somme des différences de phase paquet pour deux canaux symétriques c et 2C +1 - c est notée dans la suite $\Phi_c^{[R_i,R_\ell]} = \phi_c^{[R_i,R_\ell]} + \phi_{2C+1-c}^{[R_i,R_\ell]}$ .

Il est important de noter que l'on peut relâcher les contraintes sur l'ordre de balayage des fréquences et sur l'uniformité du balayage. En effet, on comprend que l'on peut effectuer une permutation quelconque (selon l'axe des ordonnées) des fréquences $f_c$ associées aux couples de canaux c ,2C +1 - c dans la Fig. 3 tout en conservant la symétrie temporelle, et donc la propriété exprimée en (18). Qui plus est, il n'est pas nécessaire de prévoir un balayage de la bande virtuelle avec un saut de fréquence $\Delta f$ constant, dans la mesure où l'erreur de phase donnée par (17) peut être corrigée par la seule connaissance des offsets de fréquence des stations de base et de la valeur de la fréquence canal $f_c$ considérée.

Connaissant la séquence émise (par exemple une séquence pilote), chaque récepteur de station de base peut déterminer le module de la fonction de transfert du canal de transmission après translation en bande de base, dans chaque canal de fréquence. En effet, d'après l'expression (10), le module $\alpha_c^{[T,R]}$ du coefficient complexe $A_c^{[T,R]}$ de la fonction de transfert à la fréquence $f_c$ peut être simplement obtenu en prenant le module de la corrélation de la séquence $s_{BB,c}^{[R]}[k]$ , k = 0,.., K - 1 avec la séquence pilote.

On obtient ainsi les modules $\alpha_c^{[T,R_i]} = \alpha_{2C+1-c}^{[T,R_i]}$ pour la station de base $BS_i$ et $\alpha_c^{[T,R_\ell]} = \alpha_{2C+1-c}^{[T,R_\ell]}$ pour la station de base $BS_l$.

L'entité en charge du calcul construit alors une fonction de transfert composite en bande de base :

$$\tilde{H}_c^{[R_i,R_\ell]} = \alpha_c^{[T,R_i]}\alpha_{2C+1-c}^{[T,R_i]}\alpha_c^{[T,R_\ell]}\alpha_{2C+1-c}^{[T,R_\ell]} \exp\left( j\Phi_c^{[R_i,R_\ell]} \right) , \; c = 1,...,C \qquad (19)$$

Cette fonction de transfert n'est autre que le produit de deux fonctions de transfert correspondant respectivement aux canaux de transmission entre l'objet connecté et les deux stations de base :

$$\tilde{H}_c^{[R_i,R_\ell]} = \left( H_c^{[T,R_i]} \right)^2 \left( \left( H_c^{[T,R_\ell]} \right)^2 \right)^* \qquad (20\text{-}1)$$

où $\left( H_c^{[T,R_i]} \right)^2 = \alpha_c^{[T,R_i]}\alpha_{2C+1-c}^{[T,R_i]} \exp j\left( \varphi_c^{[T,R_i]} + \varphi_{2C+1-c}^{[T,R_i]} \right)$ , et

$$\left( H_c^{[T,R_\ell]} \right)^2 = \alpha_c^{[T,R_\ell]}\alpha_{2C+1-c}^{[T,R_\ell]} \exp j\left( \varphi_c^{[T,R_\ell]} + \varphi_{2C+1-c}^{[T,R_\ell]} \right)$$

$$(20\text{-}2)$$

La fonction de transfert $\left( H_c^{[T,R_i]} \right)^2$ , c=1,...,C n'est autre que la transformée de Fourier de la réponse impulsionnelle en bande de base, $h^{[T,R_i]}$ , du canal entre l'objet connecté et la station de base $BS_i$, convoluée avec elle-même :

$$\left\{ \left( H_c^{[T,R_i]} \right)^2 \big| c = 1,..,C \right\} = DFT\left( h^{[T,R_i]}(t) * h^{[T,R_i]}(t) \right) \qquad (21\text{-}1)$$

De même :

$$\left\{ \left( H_c^{[T,R_\ell]} \right)^2 \middle| c = 1,..,C \right\} = DFT\left( h^{[T,R_\ell]}(t) * h^{[T,R_\ell]}(t) \right)$$

$$(21\text{-}2)$$

La fonction de transfert composite $\tilde{H}_c^{[R_i,R_\ell]}$ correspond à une réponse impulsionnelle en bande de base :

$$\tilde{h}^{[R_i,R_\ell]}(t) = IDFT\left\{ \tilde{H}_c^{[R_i,R_\ell]} \middle| c = 1,..,C \right\} = \left( h^{[T,R_i]}(t) * h^{[T,R_i]}(t) \right) \otimes \left( h^{[T,R_\ell]}(t) * h^{[T,R_\ell]}(t) \right)$$

$$(22)$$

où $\otimes$ est l'opérateur de corrélation.

La convolution permet de corriger grâce à son retournement temporel les erreurs de phase dues aux offsets de fréquence des oscillateurs RF dans les deux stations de base. La corrélation permet quant à elle de s'affranchir de l'instant d'émission de la forme d'onde.

Le pic de plus forte amplitude dans la réponse impulsionnelle $\tilde{h}^{[R_i,R_\ell]}$ permet d'estimer la différence de temps de propagation en ligne directe entre l'objet connecté et les deux stations de base :

$$\tau_0^{[T,R_i]} - \tau_0^{[T,R_\ell]} = \frac{1}{2} \arg \max_t \left( \left| \tilde{h}^{[R_i,R_\ell]}(t) \right| \right)$$

$$(23)$$

et, par conséquent, la différence de distance $\Delta d_{i\ell}$, entre l'objet connecté et les deux stations de base $BS_i$, $BS_l$ est finalement donnée par :

$$\Delta d_{i\ell} = c_{light}\left( \tau_0^{[T,R_i]} - \tau_0^{[T,R_\ell]} \right) = \frac{c_{light}}{2} \arg \max_t \left( \left| \tilde{h}^{[R_i,R_\ell]}(t) \right| \right) \qquad (24)$$

A partir des différences de distance $\Delta d_{i\ell}$, et des positions des stations de base l'entité en charge du calcul peut estimer par trilatération hyperbolique, la position de l'objet connecté, de manière connue en soi.

L'entité en charge du calcul peut être un serveur distant ou bien l'une des stations de base participant à la localisation, celle-ci jouant alors le rôle de station de base de référence.

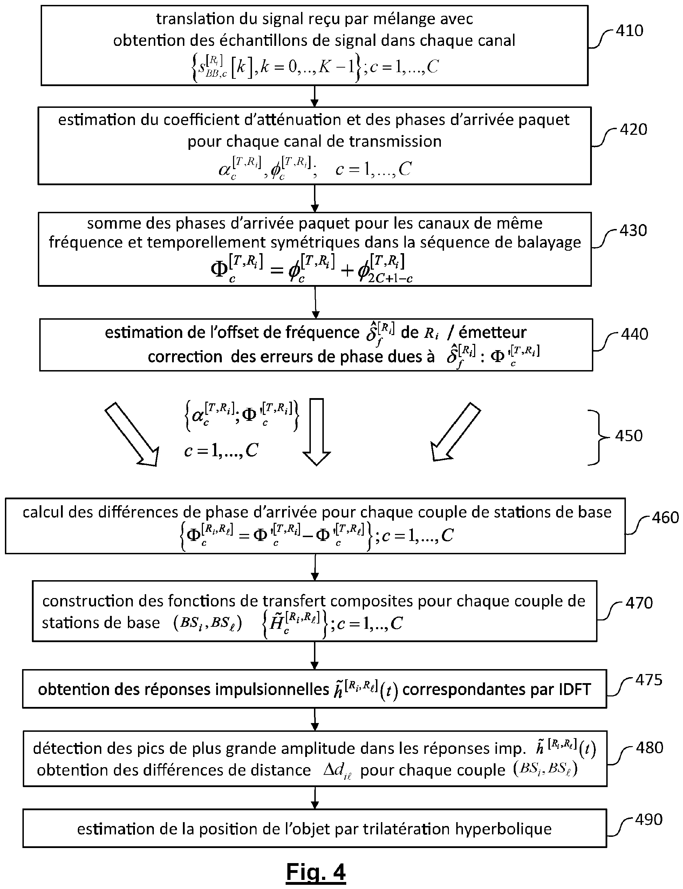

La Fig. 4 représente l'organigramme d'une méthode de localisation d'un objet connecté dans un réseau LPWA selon un premier mode de réalisation de la présente invention.

Par souci de simplification seules les étapes réalisées par une station de base $BS_i$ ont été ici représentées. L'homme du métier comprendra cependant que des étapes similaires sont réalisées par les autres stations de base participant à la localisation. En règle générale, la localisation d'un objet connecté requiert une pluralité (au moins 3 dans pour une localisation bidimensionnelle) de stations de base. On notera $\Omega$ l'ensemble de stations de base participant à la localisation.

On suppose que l'objet émet successivement des signaux (formes d'onde) à des fréquences $f_{RF} + f_c$, pendant des paquets (de durée $KT_s$), chaque paquet correspondant à une émission dans un canal de fréquence $f_c$. La fréquence de canal balaie une bande virtuelle prédéterminée une première fois selon une première séquence de canaux et une seconde fois selon une séquence de canaux, les première et seconde séquences de canaux étant temporellement symétriques, par rapport à un instant, $t_{middle}$ (cf. Fig. 3) correspondant à la moitié du balayage complet constitué de la première séquence suivie de la seconde séquence. Par exemple, la première séquence de canaux est obtenue par un balayage dans le sens ascendant et que la seconde séquence de canaux est obtenue par un balayage dans le sens descendant. Avantageusement, les balayages ascendant et descendant sont réalisés de manière uniforme avec un saut de fréquence constant, $\Delta f$.

Les étapes 410-450 sont réalisées en parallèle par les stations de base, puis les étapes 460-490 sont réalisées par le serveur de calcul, sur la base des informations transmises par ces dernières. Toutefois, certaines des étapes 420-440 confiées ici aux stations de base pourront être dévolues au serveur sous réserve de lui transmettre les informations nécessaires.

A l'étape 410, le récepteur de la station de base $BS_i$ translate le signal reçu par mélange avec la fréquence porteuse RF pour obtenir un signal de canal à une fréquence intermédiaire, puis translate en bande de base le signal de canal, cette translation en bande de base étant réalisée de manière numérique par multiplication par des phaseurs comme décrit plus haut.

A l'étape 420, le récepteur, estime au moyen d'une corrélation avec une séquence pilote (ou avec une séquence de symboles reçus sans erreur) le coefficient d'atténuation, $\alpha_c^{[T,R_i]}$, du canal de transmission, ainsi que la phase d'arrivée paquet $\Phi_c^{[T,R_i]}$, ce aux fréquences $f_{RF} + f_c$ où $f_c$, $c = 1,...,C$ sont les fréquences des différents canaux.

A l'étape 430, le récepteur effectue, la somme des phases d'arrivée paquet pour chaque couple de canaux symétriques, autrement dit la somme porte sur des paquets relatifs à la même fréquence canal mais à des sens de balayage opposés de la bande virtuelle. On obtient ainsi une phase d'arrivée moyennée pour chaque canal, $\Phi_c^{[T,R_i]}$.

Le cas échéant, l'ordre de balayage des différents fréquences canal pourra être permuté et les sauts entre fréquences canal successives pourra ne pas être constant.

A l'étape 440, le récepteur de $BS_i$ effectue une estimation de l'offset de fréquence $\hat{\delta}_f^{[R_i]}$ de son horloge par rapport à celle de l'émetteur et corrige la phase d'arrivée $\Phi_c^{[T,R_i]}$ de l'erreur de phase en lui ajoutant

$$4\pi\left(\frac{\hat{\delta}_f^{[R_i]}}{1+\hat{\delta}_f^{[R_i]}}\right)f_c CKT_s$$

, ce pour chacun des canaux de fréquence, $c = 1,..,C$ :

$$\Phi_c^{\prime[T,R_i]} = \Phi_c^{[T,R_i]} + 4\pi\left(\frac{\hat{\delta}_f^{[R_i]}}{1+\hat{\delta}_f^{[R_i]}}\right)f_c CKT_s$$

.

A l'étape 450, la station de base $BS_i$ transmet les valeurs $\left\{\alpha_c^{[T,R_i]};\Phi_c^{\prime[T,R_i]}\right\}$, $c=1,..,C$ au serveur de calcul.

A l'étape 460, le serveur calcule les différences de phase d'arrivée pour chaque couple de l'ensemble des stations de base, soit pour les stations de base $BS$, et $BS$, $\Phi_c^{[R_i,R_\ell]} = \Phi_c^{\prime[T,R_i]} - \Phi_c^{\prime[T,R_\ell]}$, ce pour chaque canal $c = 1,..,C$.

A l'étape 470, le serveur construit les fonctions de transfert composites en bande de base, $\tilde{H}_c^{[R_i,R_\ell]} = \left\{\tilde{H}_c^{[R_i,R_\ell]}; c = 1,...,C\right\}$ pour chaque couple de stations de base $BS$, , $BS$, de $\Omega$, au moyen de l'expression (19).

A l'étape 475, le serveur effectue une transformée de Fourier inverse (IDFT) de chacune des fonctions de transfert composites construites à l'étape précédente, pour générer les réponses impulsionnelles composites correspondantes, $\tilde{h}^{[R_i R_\ell]}(t)$ pour chaque couple de stations de base $BS$, , $BS$, de $\Omega$.

Lorsque l'ordre des fréquences balayées a été permuté de manière quelconque par rapport à celui d'un balayage linéaire ascendant ou descendant, l'ordre des fonctions de transfert composites $\tilde{H}_c^{[R_i,R_\ell]} = \left\{\tilde{H}_c^{[R_i,R_\ell]}; c = 1,...,C\right\}$ est permuté en sens inverse avant application de la transformée de Fourier inverse. Enfin, lorsque le balayage de la bande virtuelle est non-uniforme une transformée de Fourier inverse non uniforme (NU-IDFT) est appliquée aux fonctions de transfert composites, en utilisant les fréquences effectivement balayées.

A l'étape 480, le serveur détecte le pic de plus forte amplitude dans chaque réponse impulsionnelle $\tilde{h}^{[R_i R_\ell]}$ et en déduit, à partir de l'expression (23) la différence de temps de propagation en ligne directe entre l'objet connecté et les stations de base $BS_i$ , $BS$, de $\Omega$. Cette détection est répétée pour chaque réponse impulsionnelle $\tilde{h}^{[R_i R_\ell]}$. Le serveur en déduit les différences de distance, $\Delta d_{i\ell}$, entre l'objet connecté et les stations de base $BS_i, BS_\ell$ , ce pour chaque couple de stations de base $BS$, , $BS$, de $\Omega$.

A l'étape 490, le serveur estime la position de l'objet connecté par trilatération hyperbolique à partir des différences de distance $\Delta d_{i\ell}$ estimées à l'étape précédente.

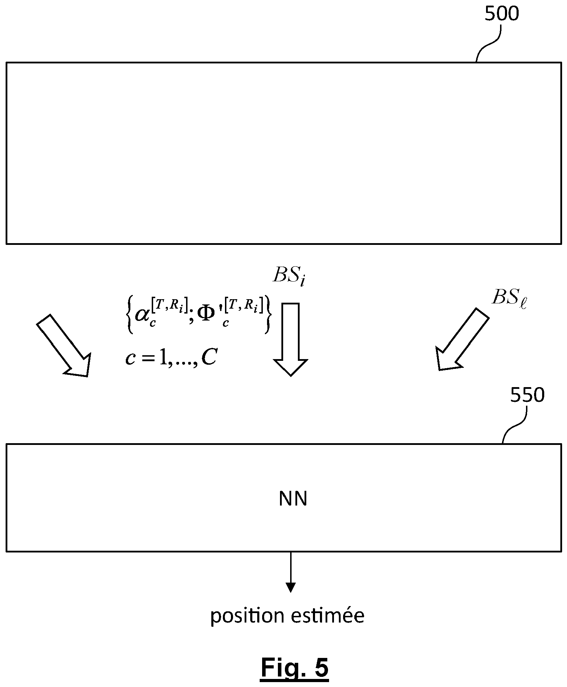

La Fig. 5 représente de manière schématique une méthode de localisation d'un objet connecté selon un second mode de réalisation de l'invention.

Dans ce second mode de réalisation les étapes réalisées par les stations de base, collectivement désignées par le bloc 500, sont identiques à celles déjà décrites en relation avec la Fig. 4

En revanche, le serveur de calcul n'effectue ni calcul explicite des différences de phases d'arrivée ni construction explicite de la fonction de transfert composite en bande de base.

L'estimation de la position de l'objet connecté est obtenue ici par un réseau de neurones, 550, dont la couche d'entrée reçoit les valeurs $\left\{ \alpha_c^{[T,R_i]} ; \Phi_c'^{[T,R_i]} \right\}$, $c = 1,..,C$, de chaque station de base *BS,* de l'ensemble $\Omega$, et dont la couche de sortie les coordonnées de l'objet.

Le réseau de neurones est préalablement entraîné sur des données labellisées, c'est-à-dire sur des ensembles de telles valeurs associées à des positions connues. Ces données labellisées peuvent être issues d'une campagne de mesures réelles (par exemple au moyen d'un objet connecté géoréférencé) ou bien être le résultat d'une simulation. Lors de la phase d'entraînement, le jeu des coefficients synaptiques est mis à jour à partir des données labellisées, au moyen de l'algorithme du gradient stochastique.

L'homme comprendra que, quel que soit le mode de réalisation, la localisation de l'objet connecté ne nécessite ici que l'envoi de deux paquets (par canal de fréquence) aux stations de base et qu'aucun noeud de référence géolocalisé n'est nécessaire.

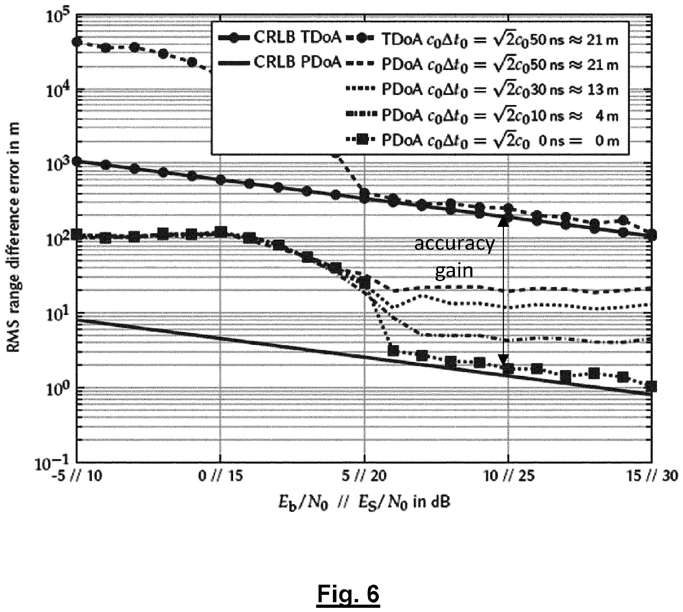

La Fig. 6 permet de comparer sur un exemple l'erreur quadratique moyenne de la position estimée en fonction du rapport signal sur bruit, pour une méthode de localisation selon la présente invention et une méthode de localisation par différences de temps d'arrivée, connue de l'état de la technique.

Le signal émis par l'objet connecté du réseau LPWA est un signal BPSK à 10 kchips/s ($B_{inst}$=10kHz) modulant une séquence de Gold de longueur 32 chips. Cette séquence est répétée sur C = 16 canaux de fréquence balayés selon le schéma de balayage symétrique illustré en Fig. 3. Les canaux de fréquence sont espacés d'un saut de fréquence de 200 kHz, d'où une largeur de bande virtuelle $B_{virt}$ de 3MHz. Seules deux stations de base ont été prises en compte, l'erreur de position étant ici mesurée par rapport à l'hyperbole passant par le point où se trouve réellement l'objet. On a supposé que les stations de base et l'objet connecté étaient affectées d'un offset de fréquence porteuse (CFO) de l'ordre de $\pm 2 \cdot 10^{-6}$.

Pour un rapport signal sur bruit $E_s / N_0$ de 25 dB, l'erreur quadratique moyenne sur la position de l'objet connecté, obtenue au moyen d'une méthode de trilatération basée sur les différences de temps d'arrivée (TDoA) est de 300 m alors qu'elle n'est plus que de 2 m au moyen de la méthode de localisation par différence de phase d'arrivée (PDoA) selon la présente invention.

La Fig. 6 montre également la variation de l'erreur quadratique moyenne de la position de l'objet en fonction de l'écart-type de synchronisation des stations de base. Par exemple pour un écart-type de synchronisation de l'ordre de 30 ns (cas d'une horloge GNSS), l'erreur quadratique moyenne sur la position de l'objet passe à 13 m ce qui reste bien inférieur à l'erreur obtenue par TDoA.

## Revendications

1. Méthode de localisation d'un objet connecté dans un réseau LPWA à l'aide d'une pluralité de stations de base, l'objet connecté émettant un signal RF composé d'une séquence de paquets dans une pluralité de canaux de fréquence formant une bande virtuelle, la bande virtuelle étant balayée une première fois selon une première séquence de canaux et une seconde fois selon une seconde séquence de canaux, la première et la seconde séquences de canaux étant temporellement symétriques, en ce que :

    (a) chaque station de base effectue (410) une translation du signal RF à la fréquence du canal, un échantillonnage du signal RF translaté, puis une translation en bande de base en mode numérique par multiplication avec des phaseurs, l'échantillonnage étant synchrone avec une horloge générale, commune à l'ensemble des stations de base ; la méthode **caractérisée en ce que**:
    (b) chaque station de base estime (420) le coefficient d'atténuation du canal de transmission entre l'objet connecté et elle-même, en bande de base, ainsi qu'une phase d'arrivée d'un paquet, dite phase d'arrivée, ce pour chaque canal de fréquence de la première séquence et de la seconde séquence de canaux ;
    (c) chaque station de base somme (430) les phases d'arrivée de paquets relatifs à un même canal mais à des séquences de canaux distinctes pour obtenir une phase d'arrivée moyennée pour chaque canal $( \Phi_c^{[T,R_i]} )$ ;
    (d) chaque station de base estime (440) l'offset de fréquence $( \hat{\delta}_f^{[R_i]} )$ entre sa fréquence d'échantillonnage et celle de l'émetteur, puis corrige pour chaque canal la phase d'arrivée moyennée d'une erreur de phase due à cet offset de fréquence, de manière à obtenir une phase d'arrivée moyennée et corrigée $\left(\Phi_c^{\prime[T,R_i]}\right)$ ;

(e) chaque station de base transmet (450) à un serveur les coefficients d'atténuation et les phases d'arrivée moyennées et corrigées précédemment estimés ;

(f) le serveur calcule, pour chaque couple de stations de base de ladite pluralité, les différences de phase d'arrivée moyennées et corrigées de manière à obtenir des différences de phase d'arrivée

$$\left(\left\{\Phi_c^{[R_i,R_\ell]} = \Phi_c^{\prime[T,R_i]} - \Phi_c^{\prime[T,R_\ell]}\right\}\right)$$

, pour chaque fréquence de canal ;

(g) le serveur construit, pour chaque couple $(BS_i,BS_l)$ constitué d'une première et d'une seconde stations de base, une fonction de transfert composite ($\tilde{H}^{[R_i,R_l]}$) relative à ces deux stations de base, à partir des coefficients d'atténuation du canal de transmission entre l'objet connecté et la première station de base (respectivement la seconde station de base) pour les différents canaux de fréquence, ainsi que les différences de phase d'arrivée obtenues à l'étape précédentes pour ledit couple de stations de base et pour ces mêmes canaux de fréquence ;

(h) le serveur effectue (475) une transformée de Fourier inverse de chaque fonction de transfert composite obtenue à l'étape précédente de manière à obtenir une réponse impulsionnelle composite ($\tilde{h}^{[R_i,R_l]}(t)$) pour chaque couple de stations de base de ladite pluralité ;

(i) le serveur détecte (480) le pic de plus grande amplitude dans chacune des réponses impulsionnelles composites et en déduit, pour chaque couple $(BS_i,BS_l)$ constitué d'une première et d'une seconde stations de base, une différence de distance ($\Delta d_{il}$) entre l'objet connecté et la première station de base, d'une part, et entre l'objet connecté et la seconde station de base, d'autre part ;

(j) le serveur estime (490) la position de l'objet connecté par trilatération hyperbolique à partir des différences de distance obtenues à l'étape précédente.

2. Méthode de localisation d'un objet connecté selon la revendication 1, **caractérisée en ce que** la première séquence de canaux est obtenue par un balayage dans le sens ascendant et que la seconde séquence de canaux est obtenue par un balayage dans le sens descendant, les balayages ascendant et descendant étant réalisés de manière uniforme avec un saut de fréquence constant ($\Delta f$).

3. Méthode de localisation d'un objet connecté selon la revendication 2, **caractérisée en ce qu'**à l'étape (a), la translation en bande de base est réalisée en multipliant, à la cadence de la fréquence d'échantillonnage, les échantillons du signal RF translaté, par des phaseurs $\exp(-j2\pi f_c kT_s)$ où $f_c$ est la fréquence du canal, $f_s = 1/T_s$ est la fréquence d'échantillonnage du récepteur et $k$ est le rang de l'échantillon.

4. Méthode de localisation d'un objet connecté selon la revendication 2 ou 3, **caractérisée en ce qu'**à l'étape (b) l'estimation du coefficient du canal de transmission et de la phase d'arrivée d'un paquet d'échantillons est obtenue en corrélant la séquence des échantillons du signal en bande de base avec une séquence pilote, le module du résultat de corrélation étant composé des gains de l'émetteur et du récepteur pour obtenir ledit coefficient du canal de transmission.

5. Méthode de localisation d'un objet connecté selon une des revendications 2 à 4, **caractérisée en ce qu'**à l'étape (c), la station de base effectue, pour chaque canal de fréquence, la somme $\Phi_c^{[T,R_i]} = \phi_c^{[T,R_i]} + \phi_{2C+1-c}^{[T,R_i]}$ , $\phi_c^{[T,R_i]}$

étant la phase d'arrivée du paquet c émis à la fréquence de canal $f_c$ lors d'un premier sens de balayage et $\phi_{2C+1-c}^{[T,R_i]}$ est la phase d'arrivée du paquet $2C + 1 - c$ émis à la fréquence de canal $f_c$, lors d'un second sens de balayage opposé au premier, K est le nombre d'échantillons dans un paquet et C est le nombre de paquets par sens de balayage.

6. Méthode de localisation d'un objet connecté selon une des revendications 2 à 5, **caractérisée en ce qu'**à l'étape (d) la phase d'arrivée moyennée $\Phi_c^{[T,R_i]}$ est corrigée par

$$\Phi'^{[T,R_i]}_c = \Phi^{[T,R_i]}_c + 4\pi \left( \frac{\hat{\delta}^{[R_i]}_f}{1+\hat{\delta}^{[R_i]}_f} \right) f_c C K T_s$$

où $\hat{\delta}^{[R_i]}_f$ est l'offset de fréquence estimé à cette même étape, $f_c$ est la fréquence du canal, C est le nombre de paquets par balayage, $K$ est le nombre d'échantillons par paquet et $f_s = 1/T_s$ est la fréquence d'échantillonnage.

**7.** Méthode de localisation d'un objet connecté selon une des revendications 2 à 6, **caractérisée en ce qu'**à l'étape (g), pour chaque couple de stations de base constitué par une première station de base *BS,* et une seconde station de base *BS_l*, le serveur construit la fonction de transfert composite par

$$\tilde{H}^{[R_i,R_\ell]}_c = \alpha^{[T,R_i]}_c \alpha^{[T,R_i]}_{2C+1-c} \alpha^{[T,R_\ell]}_c \alpha^{[T,R_\ell]}_{2C+1-c} \exp\left( j\Phi^{[R_i,R_\ell]}_c \right)$$

où $\alpha^{[T,R_i]}_c, \alpha^{[T,R_i]}_{2C+1-c}$ sont les coefficients d'atténuation du canal de transmission entre l'objet connecté et la station de base *BS_i* à la fréquence de canal *f_c*, respectivement lors du premier et du second balayage, où $\alpha^{[T,R_\ell]}_c, \alpha^{[T,R_\ell]}_{2C+1-c}$ sont les coefficients d'atténuation du canal de transmission entre l'objet connecté et la station de base *BS,* à la fréquence de canal *f_c*, respectivement lors du premier et du second balayage, et où $\Phi^{[R_i,R_\ell]}_c$ est la différence de phase d'arrivée obtenue à l'étape (f) pour le couple de stations de base *BS_i*, *BS_l* et pour la fréquence de canal *f_c*.

**8.** Méthode de localisation d'un objet connecté selon une des revendications 2 à 7, **caractérisée en ce qu'**à l'étape (i) la différence de distance entre l'objet connecté et une première station de base *BS_i* d'une part, et l'objet connecté et une seconde station de base *BS_l*, d'autre part est obtenue par $$\Delta d_{i\ell} = \frac{c_{light}}{2} \arg \max_t \left( \left| \tilde{h}^{[R_i,R_\ell]}(t) \right| \right)$$ où $\tilde{h}^{[R_i,R_l]}(t)$ est la réponse impulsionnelle composite obtenue à l'étape (h) pour le couple de stations de base *BS_i,BS_l*, et *c_light* est la vitesse de la lumière.

**9.** Méthode de localisation d'un objet connecté selon une des revendications précédentes, **caractérisée en ce que** l'horloge globale est donnée par un module de réception GNSS équipant chacune des stations de base de ladite pluralité.

**10.** Méthode de localisation d'un objet connecté selon l'une des revendications 1 à 8, **caractérisée en ce que** l'horloge globale est obtenue via Internet au moyen du protocole NTP auprès d'un serveur de temps.

**11.** Méthode de localisation d'un objet connecté selon l'une des revendications 1 à 8, **caractérisée en ce que** l'horloge globale est obtenue via un réseau d'amenée 5G.

**12.** Méthode de localisation d'un objet connecté dans un réseau LPWA à l'aide d'une pluralité de stations de base, l'objet connecté émettant un signal RF composé d'une séquence de paquets dans une pluralité de canaux de fréquence formant une bande virtuelle, la bande virtuelle étant balayée une première fois, selon une première séquence de canaux et une seconde fois selon une seconde séquence de canaux, la première et la seconde séquences de canaux étant temporellement symétriques, en ce que :

(a) chaque station de base effectue (410) une translation du signal RF à la fréquence du canal, un échantillonnage du signal RF translaté, puis une translation en bande de base en mode numérique par multiplication avec des phaseurs, l'échantillonnage étant synchrone avec une horloge générale, commune à l'ensemble des stations de base ; la méthode **caractérisée en ce que**:
(b) chaque station de base estime (420) le coefficient d'atténuation du canal de transmission entre l'objet connecté et elle-même, en bande de base, ainsi qu'une phase d'arrivée d'un paquet, dite phase d'arrivée, ce pour chaque canal de fréquence de la première séquence et de la seconde séquence de canaux ;

(c) chaque station de base somme (430) les phases d'arrivée de paquets relatifs à un même canal mais à des séquences de canaux distinctes pour obtenir une phase d'arrivée moyennée pour chaque canal $\left(\Phi_c^{[T,R_i]}\right)$ ;

(d) chaque station de base estime (440) l'offset de fréquence $\left(\hat{\delta}_f^{[R_i]}\right)$ entre sa fréquence d'échantillonnage et celle de l'émetteur, puis corrige pour chaque canal la phase d'arrivée moyennée d'une erreur de phase due à cet offset de fréquence, de manière à obtenir une phase d'arrivée moyennée et corrigée $\left(\Phi_c^{\prime[T,R_i]}\right)$ ;

(e) chaque station de base transmet (450) à un serveur les coefficients d'atténuation et les phases d'arrivée moyennées et corrigées précédemment estimés ;

(f) le serveur comporte un réseau de neurones préalablement entraîné, les coefficients d'atténuation et les phases d'arrivée moyennées et corrigées pour chaque station de base de ladite pluralité étant fournis à la couche d'entrée du réseau de neurones et la couche de sortie du réseau de neurones fournissant une estimation de la position de l'objet connecté.

**Patentansprüche**

1. Verfahren zum Lokalisieren eines verbundenen Objekts in einem LPWA-Netzwerk mithilfe von mehreren Basisstationen, wobei das verbundene Objekt ein HF-Signal sendet, das aus einer Folge von Paketen in mehreren Frequenzkanälen besteht, die ein virtuelles Band bilden, wobei das virtuelle Band ein erstes Mal gemäß einer ersten Folge von Kanälen und ein zweites Mal gemäß einer zweiten Folge von Kanälen abgetastet wird, wobei die erste und die zweite Folge von Kanälen zeitlich symmetrisch sind, wobei:

(a) jede Basisstation eine Umsetzung des HF-Signals auf die Kanalfrequenz, eine Abtastung des umgesetzten HF-Signals und dann eine Umsetzung in das Basisband im digitalen Modus durch Multiplikation mit Phasoren durchführt (410), wobei die Abtastung synchron mit einem allgemeinen, allen Basisstationen gemeinsamen Takt ist; wobei das Verfahren **dadurch gekennzeichnet ist, dass**:

(b) jede Basisstation den Dämpfungskoeffizienten des Übertragungskanals zwischen dem verbundenen Objekt und ihr selbst im Basisband sowie eine Ankunftsphase eines Pakets, die sogenannte Ankunftsphase, für jeden Frequenzkanal der ersten Sequenz und der zweiten Sequenz von Kanälen schätzt (420);

(c) jede Basisstation die Ankunftsphasen von Paketen, die sich auf denselben Kanal, aber auf unterschiedliche Kanalfolgen beziehen, summiert (430), um eine gemittelte Ankunftsphase für jeden Kanal zu erhalten $\left(\Phi_c^{[T,R_i]}\right)$ ;

(d) jede Basisstation den Frequenzoffset $\left(\hat{\delta}_f^{[R_i]}\right)$ zwischen ihrer Abtastfrequenz und der des Senders schätzt (440) und dann für jeden Kanal die gemittelte Ankunftsphase um einen Phasenfehler aufgrund dieses Frequenzoffsets korrigiert, so dass eine gemittelte und korrigierte Ankunftsphase $\left(\Phi_c^{\prime[T,R_i]}\right)$ erhalten wird;

(e) jede Basisstation die zuvor geschätzten, gemittelten und korrigierten Dämpfungskoeffizienten und Ankunftsphasen an einen Server überträgt (450);

(f) der Server für jedes Paar der mehreren Basisstationen die gemittelten und korrigierten Ankunftsphasendifferenzen berechnet, um Ankunftsphasendifferenzen $\left(\left\{\Phi_c^{[R_i,R_\ell]} = \Phi_c^{\prime[T,R_i]} - \Phi_c^{\prime[T,R_\ell]}\right\}\right)$ für jede Kanalfrequenz zu erhalten;

(g) der Server für jedes Paar ($BS_i, BS_l$), das aus einer ersten und einer zweiten Basisstation besteht, eine zusammengesetzte Übertragungsfunktion ($\tilde{H}^{[R_i,R_l]}$) bezüglich dieser beiden Basisstationen aus den Dämpfungskoeffizienten des Übertragungskanals zwischen dem verbundenen Objekt und der ersten Basisstation (bzw. der zweiten Basisstation) für die verschiedenen Frequenzkanäle sowie aus den im vorherigen Schritt für das Paar von Basisstationen und für dieselben Frequenzkanäle erhaltenen Ankunftsphasendifferenzen konstruiert;

(h) der Server eine inverse Fourier-Transformation jeder im vorherigen Schritt erhaltenen zusammengesetzten Übertragungsfunktion durchführt (475), um eine zusammengesetzte Impulsantwort ($\tilde{h}^{[R_i,R_l]}(t)$) für jedes der mehreren Paare von Basisstationen zu erhalten;

(j) der Server die Position des verbundenen Objekts durch hyperbolische Trilateration aus den im vorherigen Schritt erhaltenen Entfernungsdifferenzen schätzt (490).

2. Verfahren zur Lokalisierung eines verbundenen Objekts nach Anspruch 1, **dadurch gekennzeichnet, dass** die erste Kanalfolge durch eine Abtastung in Aufwärtsrichtung und die zweite Kanalfolge durch eine Abtastung in Abwärtsrichtung erhalten wird, wobei die Aufwärts- und Abwärtsabtastungen gleichmäßig mit einem konstanten Frequenzsprung ($\Delta f$) durchgeführt werden.

3. Verfahren zur Lokalisierung eines verbundenen Objekts nach Anspruch 2, **dadurch gekennzeichnet, dass** in Schritt (a) die Umsetzung in das Basisband durch Multiplikation der Abtastwerte des umgesetzten HF-Signals mit Phasoren exp($-j2\pi f_c kT_s$) im Takt der Abtastfrequenz durchgeführt wird, wobei $f_c$ die Kanalfrequenz, $f_s = 1/T_s$ die Abtastfrequenz des Empfängers und $k$ der Rang des Abtastwerts ist.

4. Verfahren zur Lokalisierung eines verbundenen Objekts nach Anspruch 2 oder 3, **dadurch gekennzeichnet, dass** in Schritt (b) die Schätzung des Übertragungskanalkoeffizienten und der Ankunftsphase eines Abtastpaketes durch Korrelation der Abtastsequenz des Basisbandsignals mit einer Pilotsequenz erhalten wird, wobei der Betrag des Korrelationsergebnisses aus den Verstärkungen des Senders und des Empfängers zusammengesetzt ist, um den genannten Übertragungskanalkoeffizienten zu erhalten.

5. Verfahren zum Lokalisieren eines verbundenen Objekts nach einem der Ansprüche 2 bis 4, **dadurch gekennzeichnet, dass** die Basisstation in Schritt (c) für jeden Frequenzkanal die Summe $$\Phi_c^{[T,R_i]} = \phi_c^{[T,R_i]} + \phi_{2C+1-c}^{[T,R_i]}$$ bildet, wobei $\phi_c^{[T,R_i]}$ die Ankunftsphase des bei der Kanalfrequenz $f_c$ gesendeten Pakets c in einer ersten Abtastrichtung ist und $\phi_{2C+1-c}^{[T,R_i]}$ die Ankunftsphase des bei der Kanalfrequenz $f_c$ gesendeten Pakets $2C + 1 - c$ in einer zweiten Abtastrichtung ist, die der ersten entgegengesetzt ist, $K$ die Anzahl der Abtastwerte in einem Paket ist und C die Anzahl der Pakete pro Abtastrichtung ist.

6. Verfahren zur Lokalisierung eines verbundenen Objekts nach einem der Ansprüche 2 bis 5, **dadurch gekennzeichnet, dass** in Schritt (d) die gemittelte Ankunftsphase $\Phi_c^{[T,R_i]}$ korrigiert wird durch $$\Phi_c'^{[T,R_i]} = \Phi_c^{[T,R_i]} + 4\pi\left(\frac{\hat{\delta}_f^{[R_i]}}{1+\hat{\delta}_f^{[R_i]}}\right)f_c CKT_s$$ wobei $\hat{\delta}_f^{[R_i]}$ der in demselben Schritt geschätzte Frequenzoffset ist, $f_c$ die Kanalfrequenz ist, C die Anzahl der Pakete pro Abtastung ist, K die Anzahl der Abtastwerte pro Paket ist und $f_s = 1/T_s$ die Abtastfrequenz ist.

7. Verfahren zum Lokalisieren eines verbundenen Objekts nach einem der Ansprüche 2 bis 6, **dadurch gekennzeichnet, dass** in Schritt (g) für jedes Paar von Basisstationen, das aus einer ersten Basisstation *BS,* und einer zweiten Basisstation *BS,* besteht, der Server die zusammengesetzte Übertragungsfunktion durch $$\tilde{H}_c^{[R_i,R_\ell]} = \alpha_c^{[T,R_i]}\alpha_{2C+1-c}^{[T,R_i]}\alpha_c^{[T,R_\ell]}\alpha_{2C+1-c}^{[T,R_\ell]}\exp\left(j\Phi_c^{[R_i,R_\ell]}\right)$$ konstruiert, wobei $\alpha_c^{[T,R_i]}, \alpha_{2C+1-c}^{[T,R_i]}$ die Dämpfungs-koeffizienten des Übertragungskanals zwischen dem verbundenen Objekt und der Basisstation *BS,* bei der Kanalfrequenz $f_c$ jeweils beim ersten und zweiten Scan sind, wobei $\alpha_c^{[T,R_\ell]}, \alpha_{2C+1-c}^{[T,R_\ell]}$ die Dämpfungskoeffizienten des Übertragungskanals zwischen dem verbundenen Objekt und der Basisstation *BS,* bei der Kanalfrequenz $f_c$ jeweils beim ersten und zweiten Scan sind, und wobei $\Phi_c^{[R_i,R_\ell]}$ die in Schritt (f) erhaltene Ankunftsphasendifferenz für das Paar von Basisstationen $BS_i, BS_l$ und für die Kanalfrequenz $f_c$ ist.

8. Verfahren zum Lokalisieren eines verbundenen Objekts nach einem der Ansprüche 2 bis 7, **dadurch gekennzeichnet, dass** in Schritt (i) die Differenz der Entfernung zwischen dem verbundenen Objekt und einer ersten Basisstation *BS,* einerseits sowie dem verbundenen Objekt und einer zweiten Basisstation $BS_l$ andererseits durch

$$\Delta d_{i\ell} = \frac{c_{light}}{2} \arg\max_t \left( \left\| \tilde{h}^{[R_i, R_\ell]}(t) \right\| \right)$$

erhalten wird, wobei $\tilde{h}^{[R_f R_i]}(t)$ die in Schritt (h) erhaltene zusammengesetzte Impulsantwort für das Paar von Basisstationen $BS_i, BS_l$ ist und $c_{light}$ die Lichtgeschwindigkeit ist.

**9.** Verfahren zum Lokalisieren eines verbundenen Objekts nach einem der vorhergehenden Ansprüche, **dadurch gekennzeichnet, dass** der gemeinsame Takt von einem GNSS-Empfangsmodul gegeben wird, mit dem jede der mehreren Basisstationen ausgestattet ist.

**10.** Verfahren zum Lokalisieren eines verbundenen Objekts nach einem der Ansprüche 1 bis 8, **dadurch gekennzeichnet, dass** die globale Uhr über das Internet mithilfe des NTP-Protokolls von einem Zeitserver bezogen wird.

**11.** Verfahren zum Lokalisieren eines verbundenen Objekts nach einem der Ansprüche 1 bis 8, **dadurch gekennzeichnet, dass** der globale Takt über ein 5G-Zuführungsnetz erhalten wird.

**12.** Verfahren zum Lokalisieren eines verbundenen Objekts in einem LPWA-Netzwerk mit Hilfe mehrerer Basisstationen, wobei das verbundene Objekt ein HF-Signal sendet, das aus einer Folge von Paketen in mehreren Frequenzkanälen besteht, die ein virtuelles Band bilden, wobei das virtuelle Band ein erstes Mal gemäß einer ersten Folge von Kanälen und ein zweites Mal gemäß einer zweiten Folge von Kanälen abgetastet wird, wobei die erste und die zweite Folge von Kanälen zeitlich symmetrisch sind, wobei:

(a) jede Basisstation eine Umsetzung des HF-Signals auf die Kanalfrequenz, eine Abtastung des umgesetzten HF-Signals und dann eine Umsetzung in das Basisband im digitalen Modus durch Multiplikation mit Phasoren durchführt (410), wobei die Abtastung synchron mit einem allgemeinen, allen Basisstationen gemeinsamen Takt ist; wobei das Verfahren **dadurch gekennzeichnet ist, dass**:

(b) jede Basisstation den Dämpfungskoeffizienten des Übertragungskanals zwischen dem verbundenen Objekt und ihr selbst im Basisband sowie eine Ankunftsphase eines Pakets, die sogenannte Ankunftsphase, für jeden Frequenzkanal der ersten Sequenz und der zweiten Sequenz von Kanälen schätzt (420);

(c) jede Basisstation die Ankunftsphasen von Paketen, die sich auf denselben Kanal, aber auf unterschiedliche Kanalfolgen beziehen, summiert (430), um eine gemittelte Ankunftsphase für jeden Kanal zu erhalten $\left( \Phi_c^{[T, R_l]} \right)$;

(d) jede Basisstation den Frequenzoffset $\left( \hat{\delta}_f^{[R_i]} \right)$ zwischen ihrer Abtastfrequenz und der des Senders schätzt (440) und dann für jeden Kanal die gemittelte Ankunftsphase um einen Phasenfehler aufgrund dieses Frequenzoffsets korrigiert, so dass eine gemittelte und korrigierte Ankunftsphase $\left( \Phi_c'^{[T, R_l]} \right)$ erhalten wird;

(e) jede Basisstation die zuvor geschätzten, gemittelten und korrigierten Dämpfungskoeffizienten und Ankunftsphasen an einen Server überträgt (450);

(f) der Server ein zuvor trainiertes neuronales Netz aufweist, wobei die Dämpfungskoeffizienten und die gemittelten und korrigierten Ankunftsphasen für jede Basisstation der mehreren Basisstationen an die Eingangsschicht des neuronalen Netzes geliefert werden und die Ausgangsschicht des neuronalen Netzes eine Schätzung der Position des verbundenen Objekts bereitstellt.

**Claims**

**1.** A method for locating a connected object in an LPWA network using a plurality of base stations, the connected object transmitting an RF signal comprised of a sequence of packets in a plurality of frequency channels forming a virtual band, the virtual band being scanned a first time according to a first channel sequence and a second time according to a second channel sequence, the first and second channel sequences being temporally symmetrical to each other, wherein:

(a) each base station performs (410) translation of the RF signal at the channel frequency, sampling of the RF signal translated, and then baseband translation in digital mode by multiplication with phasors, the sampling being synchronous with a general clock, common to all the base stations; the method being **characterised in that**:

(b) each base station estimates (420) the attenuation coefficient of the transmission channel between the connected object and itself, in baseband, as well as a phase of arrival of a packet, called a phase of arrival, for each frequency channel of the first sequence and of the second sequence of channels;

(c) each base station sums (430) the phases of arrival of packets relating to a same channel but to distinct sequences of channels to obtain an averaged phase of arrival for each channel $(\Phi_c^{[T,R_i]})$ ;

(d) each base station estimates (440) the frequency offset $(\hat{\delta}_f^{[R_i]})$ between its sampling frequency and that of the transmitter, and then corrects the averaged phase of arrival for each channel by a phase error due to this frequency offset, so as to obtain an averaged and corrected phase of arrival $(\Phi_c^{\prime[T,R_i]})$ ;

(e) each base station transmits (450) to a server the previously estimated attenuation coefficients and averaged and corrected phases of arrival;

(f) the server calculates, for each pair of base stations of said plurality, the averaged and corrected phase differences of arrival so as to obtain phase differences of arrival $(\{\Phi_c^{[R_i,R_\ell]} = \Phi_c^{\prime[T,R_i]} - \Phi_c^{\prime[T,R_\ell]}\})$ , for each channel frequency;

(g) the server constructs, for each pair $(BS_i, BS_l)$ consisting of a first and a second base station, a composite transfer function ($\tilde{H}^{[R_i,R_l]}$) relating to these two base stations, from the attenuation coefficients of the transmission channel between the connected object and the first base station (respectively the second base station) for the different frequency channels, as well as the phase differences of arrival obtained in the previous step for the said pair of base stations and for these same frequency channels;

(h) the server performs (475) an inverse Fourier transform of each composite transfer function obtained in the previous step so as to obtain a composite impulse response ($\tilde{h}^{[R_i,R_l]}(t)$ ) for each pair of base stations of said plurality;

(i) the server detects (480) the peak of highest amplitude in each of the composite impulse responses and derives therefrom, for each pair $(BS_i, BS_l)$ consisting of a first and a second base station, a distance difference ($\Delta d_{il}$ ) between the connected object and the first base station, on the one hand, and between the connected object and the second base station, on the other hand;

(j) the server estimates (490) the position of the connected object by hyperbolic trilateration from the distance differences obtained in the previous step.

2. The method for locating a connected object according to claim 1, **characterised in that** the first channel sequence is obtained by scanning in the uplink direction and the second channel sequence is obtained by scanning in the downlink direction, the uplink and downlink scans being performed uniformly with a constant frequency hopping ( $\Delta f$ ).

3. The method for locating a connected object according to claim 2, **characterised in that** in step (a), the baseband translation is performed by multiplying, at the rate of the sampling frequency, the samples of the translated RF signal, by phasors $\exp(-j2\pi f_c k T_s)$ *where* $f_c$ is the channel frequency, $f_s = 1/T_s$ is the sampling frequency of the receiver and $k$ is the rank of the sample.

4. The method for locating a connected object according to claim 2 or 3, **characterised in that** in step (b) estimating the transmission channel coefficient and the phase of arrival of a sample packet is achieved by correlating the sequence of samples of the baseband signal with a pilot sequence, the modulus of the correlation result being comprised of the gains of the transmitter and the receiver to obtain said transmission channel coefficient.

5. The method for locating a connected object according to one of claims 2 to 4, **characterised in that** in step (c) the base station performs, for each frequency channel, the sum $\Phi_c^{[T,R_i]} = \phi_c^{[T,R_i]} + \phi_{2C+1-c}^{[T,R_i]}$ , $\phi_c^{[T,R_i]}$ being the phase of arrival of the packet c transmitted at the channel frequency $f_c$ in a first scanning direction and $\phi_{2C+1-c}^{[T,R_i]}$ is the phase of arrival of the packet 2C + 1 - c transmitted at the channel frequency $f_c$ in a second scanning direction opposite to the first one, K is the number of samples in a packet and C is the number of packets per scanning direction.

6. The method for locating a connected object according to one of claims 2 to 5, **characterised in that** in step (d) the averaged phase of arrival $\Phi_c^{[T,R_i]}$ is corrected by

$$\Phi_c'^{[T,R_i]} = \Phi_c^{[T,R_i]} + 4\pi\left(\frac{\hat{\delta}_f^{[R_i]}}{1+\hat{\delta}_f^{[R_i]}}\right)f_c CKT_s$$

where $\hat{\delta}_f^{[R_i]}$ is the frequency offset estimated **in that** same step, $f_c$ is the channel frequency, C is the number of packets per scan, K is the number of samples per packet and $f_s = 1/T_s$ is the sampling frequency.

7. The method for locating a connected object according to one of claims 2 to 6, **characterised in that** in step (g), for each pair of base stations consisting of a first base station $BS_i$ and a second base station $BS_l$, the server constructs the composite transfer function by

$$\tilde{H}_c^{[R_i,R_\ell]} = \alpha_c^{[T,R_i]}\alpha_{2C+1-c}^{[T,R_i]}\alpha_c^{[T,R_\ell]}\alpha_{2C+1-c}^{[T,R_\ell]}\exp\left(j\Phi_c^{[R_i,R_\ell]}\right)$$

where $\alpha_c^{[T,R_i]}, \alpha_{2C+1-c}^{[T,R_i]}$ are the attenuation coefficients of the transmission channel between the connected object and the base station $BS_i$ at the channel frequency $f_c$, respectively in the first and second scan, where $\alpha_c^{[T,R_\ell]}, \alpha_{2C+1-c}^{[T,R_\ell]}$ are the attenuation coefficients of the transmission channel between the connected object and the base station $BS_i$ at the channel frequency $f_c$, respectively in the first and second scan, and where $\Phi_c^{[R_i,R_\ell]}$ is the phase difference of arrival obtained in step (f) for the pair of base stations base $BS_i$, $BS_l$ and for the channel frequency $f_c$.

8. The method for locating a connected object according to one of claims 2 to 7, **characterised in that** in step (i) the distance difference between the connected object and a first base station $BS_i$ on the one hand, and the connected object and a second base station $BS_l$ on the other hand, is obtained by

$$\Delta d_{i\ell} = \frac{c_{light}}{2}\arg\max_t\left(\left\|\tilde{h}^{[R_i,R_\ell]}(t)\right\|\right)$$

where $\tilde{h}^{[R_i,R_l]}(t)$ is the composite impulse response obtained in step (h) for the pair of base stations $BS_i, BS_l$, and $c_{light}$ is the speed of light.

9. The method for locating a connected object according to one of the preceding claims, **characterised in that** the overall clock is given by a GNSS reception module equipping each of the base stations of said plurality.

10. The method for locating a connected object according to one of the claims 1 to 8, **characterised in that** the overall clock is obtained via the Internet by means of the NTP protocol from a time server.

11. The method for locating a connected object according to any of claims 1 to 8, **characterised in that** the overall clock is obtained via a backhaul network of a 5G network.

12. A method for locating a connected object in an LPWA network using a plurality of base stations, the connected object transmitting an RF signal comprised of a sequence of packets in a plurality of frequency channels forming a virtual band, the virtual band being scanned a first time, according to a first channel sequence and a second time according to a second channel sequence, the first and second channel sequences being temporally symmetrical to each other, wherein:

   (a) each base station performs (410) translation of the RF signal at the channel frequency, sampling of the RF signal translated, and then baseband translation in digital mode by multiplication with phasors, the sampling being synchronous with a general clock, common to all the base stations; the method being **characterised in that**:
   (b) each base station estimates (420) the attenuation coefficient of the transmission channel between the connected object and itself, in baseband, as well as a phase of arrival of a packet, called a phase of arrival, for each frequency channel of the first sequence and of the second sequence of channels;

(c) each base station sums (430) the phases of arrival of packets relating to a same channel but to distinct sequences of channels to obtain an averaged phase of arrival for each channel $\left(\Phi_c^{[T,R_i]}\right)$;

(d) each base station estimates (440) the frequency offset $\left(\hat{\delta}_f^{[R_i]}\right)$ between its sampling frequency and that of the transmitter, and then corrects the averaged phase of arrival for each channel by a phase error due to this frequency offset, so as to obtain an averaged and corrected phase of arrival $\left(\Phi_c^{'[T,R_i]}\right)$;

(e) each base station transmits (450) to a server the previously estimated attenuation coefficients and averaged and corrected phases of arrival;

(f) the server includes a previously trained neural network, the attenuation coefficients and the averaged and corrected phases of arrival for each base station of said plurality being provided to the input layer of the neural network and the output layer of the neural network providing an estimate of the position of the connected object.

130    140

120

TDoA/
PDoA

TDoA/
PDoA

Time
synchronization

110

TDoA/
PDoA

module
de
calcul

x,y,z

WSN node

Time
synchronization

...

Time
synchronization

...

**Fig. 1**

**Fig. 2**

**Fig. 3**

translation du signal reçu par mélange avec
obtention des échantillons de signal dans chaque canal

$$\left\{ s_{BB,c}^{[R_i]}[k], k = 0,.., K-1 \right\}; c = 1,...,C$$

410

estimation du coefficient d'atténuation et des phases d'arrivée paquet
pour chaque canal de transmission

$$\alpha_c^{[T,R_i]}, \phi_c^{[T,R_i]}; \quad c = 1,...,C$$

420

somme des phases d'arrivée paquet pour les canaux de même
fréquence et temporellement symétriques dans la séquence de balayage

$$\Phi_c^{[T,R_i]} = \phi_c^{[T,R_i]} + \phi_{2C+1-c}^{[T,R_i]}$$

430

estimation de l'offset de fréquence $\hat{\delta}_f^{[R_i]}$ de $R_i$ / émetteur
correction des erreurs de phase dues à $\hat{\delta}_f^{[R_i]}$ : $\Phi'^{[T,R_i]}_c$

440

$$\left\{ \alpha_c^{[T,R_i]}; \Phi'^{[T,R_i]}_c \right\}$$
$$c = 1,...,C$$

450

calcul des différences de phase d'arrivée pour chaque couple de stations de base

$$\left\{ \Phi_c^{[R_i,R_\ell]} = \Phi'^{[T,R_i]}_c - \Phi'^{[T,R_\ell]}_c \right\}; c = 1,...,C$$

460

construction des fonctions de transfert composites pour chaque couple de
stations de base $(BS_i, BS_\ell)$ $\left\{ \tilde{H}_c^{[R_i,R_\ell]} \right\}; c = 1,..,C$

470

obtention des réponses impulsionnelles $\tilde{h}^{[R_i,R_\ell]}(t)$ correspondantes par IDFT

475

détection des pics de plus grande amplitude dans les réponses imp. $\tilde{h}^{[R_i,R_\ell]}(t)$
obtention des différences de distance $\Delta d_{i\ell}$ pour chaque couple $(BS_i, BS_\ell)$

480

estimation de la position de l'objet par trilatération hyperbolique

490

## Fig. 4

$$BS_i$$

$$\left\{\alpha_c^{[T,R_i]}; \Phi_c'^{[T,R_i]}\right\}$$
$$c = 1,...,C$$

$$BS_\ell$$

NN

position estimée

**Fig. 5**

**Fig. 6**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102007043649 A

**Littérature non-brevet citée dans la description**

- **M. PICHLER et al.** Multi-channel distance measurement with IEEE 802.15.4 (ZigBee) devices. *IEEE Journal of selected topics in signal processing,* Octobre 2009, vol. 3 (5), 845-859

- **F. WOLF et al.** Cohérent multi-channel ranging for narrowband LPWAN : simulation and expérimentation results. *Proc. of 15th Workshop on Positioning, Navigation and Communication (WPNC),* 2018, 1-6